# EUROPÄISCHE PATENTSCHRIFT

(11) **EP 3 177 482 B1**
(45) Veröffentlichungstag und Bekanntmachung des Hinweises auf die Patenterteilung: **16.10.2019**
(21) Anmeldenummer: 14750199.3
(22) Anmeldetag: 07.08.2014
(51) Int. Cl.: B60P 1/64

(54) **WECHSELVORRICHTUNG FÜR EINEN AUFBAU EINES FAHRZEUGS, KOMBINATION AUS FAHRZEUG, MINDESTENS EINEM AUFBAU UND WECHSELVORRICHTUNG UND VERFAHREN ZUM WECHSELN EINES AUFBAUS BEI EINEM FAHRZEUG**
EXCHANGING DEVICE FOR A BODY OF A VEHICLE, COMBINATION OF A VEHICLE, AT LEAST ONE BODY, AND AN EXCHANGING DEVICE, AND METHOD FOR EXCHANGING A VEHICLE BODY
DISPOSITIF DE REMPLACEMENT POUR UNE CAISSE D'UN VÉHICULE, COMBINAISON COMPOSÉE D'UN VÉHICULE, D'AU MOINS UNE CAISSE ET D'UN DISPOSITIF DE REMPLACEMENT ET PROCÉDÉ SERVANT À REMPLACER UNE CAISSE POUR UN VÉHICULE

(43) Veröffentlichungstag der Anmeldung: 14.06.2017
(73) Patentinhaber: Alfred Kärcher SE & Co. KG, 71364 Winnenden (DE)
(72) Erfinder: HAUG, Marcus, 71711 Steinheim an der Murr (DE); VIETH, Oliver, 23970 Wismar (DE); HABERL, Bernd, 71554 Weissach im Tal (DE); WAHL, Joachim, 71579 Spiegelberg (DE)
(74) Vertreter: Hoeger, Stellrecht & Partner Patentanwälte mbB
(86) Internationale Anmeldenummer: PCT/EP2014/066988
(87) Internationale Veröffentlichungsnummer: WO 2016/020004

(56) Entgegenhaltungen:
- EP-A1- 1 190 899
- DE-A1- 3 708 641
- DE-U1- 29 519 243
- US-A1- 2003 053 899

## Beschreibung

Die Erfindung betrifft eine Wechselvorrichtung für einen Aufbau eines Fahrzeugs, wobei das Fahrzeug einen kippbaren Halter für den Aufbau aufweist.

Ferner betrifft die Erfindung eine Kombination aus einem Fahrzeug mit einem kippbaren Halter, mindestens einem Aufbau und einer Wechselvorrichtung.

Weiterhin betrifft die Erfindung ein Verfahren zum Wechseln eines Aufbaus bei einem Fahrzeug mit einem kippbaren Halter für den Aufbau.

Aus der DE 37 08 641 A1 ist eine Schnellwechselvorrichtung für Heckaufsatzgeräte an Lastkraftwagen bekannt, wobei der Lastkraftwagen eine hydraulische Kippvorrichtung aufweist. Das Heckaufsatzgerät wird auf vier Auflagestellen eines hydraulisch hochschwenkbaren Rahmens abgestützt. Es sind dabei vier Standbeine vorgesehen, auf denen das Heckaufsatzgerät so auf dem Boden abstellbar ist, dass der Lastkraftwagen unter dem stehenbleibenden Heckaufsatzgerät wegfahrbar ist. Auf dem hochschwenkbaren Rahmen sitzt ein Hilfsrahmen, der an seinem hinteren Ende vertikale Aufnahmehülsen und an einem vorderen Ende im Wesentlichen waagrecht sich erstreckende Hakeneinsätze aufweist. Unter dem auf dem Hilfsrahmen aufgesetzten Heckaufsatzgerät ist ein Aufsatzrahmen befestigt, der an seinem hinteren Ende Zapfen aufweist, welche in die Aufnahmehülsen einsteckbar sind, und an seinem vorderen Ende Löcher zur Aufnahme des Hakeneinsatzes aufweist. Die Standbeine sind nach dem Anheben des hydraulisch hochschwenkbaren Rahmens des Lastkraftwagens an dem Heckaufsatzgerät fest anbringbar, wobei die Länge der Standbeine und die Anordnung der Aufnahmehülsen und Zapfen so gewählt ist, dass nach dem anschließenden Wiederabsenken des Rahmens die Aufnahmehülsen von den Zapfen nach unten abgezogen werden.

Aus der DE 20 2005 014 793 U1 ist ein winkelförmiges Stützbein für Wechselaufbauten von Lastkraftwagen bekannt.

Der Erfindung liegt die Aufgabe zugrunde, eine Wechselvorrichtung der eingangs genannten Art bereitzustellen, mit dem sich auf einfache Weise ein Aufbau an einem Fahrzeug wechseln lässt und insbesondere montieren beziehungsweise demontieren lässt. Insbesondere soll ein Wechselvorgang durch eine Person ohne besondere körperliche Anstrengungen möglich sein.

Diese Aufgabe wird bei der Wechselvorrichtung der eingangs genannten Art erfindungsgemäß dadurch gelöst, dass ein Rahmen vorgesehen ist, an welchem der Aufbau fixiert oder fixierbar ist und über welchen der Aufbau an dem Halter montierbar ist, wobei der Rahmen sich in einer Längsrichtung zwischen einem vorderen Ende und einem hinteren Ende erstreckt, eine Stützeinrichtung vorgesehen ist, welche an dem Rahmen lösbar fixierbar ist und über welche der Rahmen beabstandet zu einem Untergrund, auf dem das Fahrzeug aufsteht, abstützbar ist, wobei die Stützeinrichtung mindestens eine erste vordere Stütze und eine zweite vordere Stütze, und mindestens eine hintere Stütze umfasst, wobei die erste vordere Stütze und die zweite vordere Stütze zur Fixierung an dem Rahmen in einem Bereich des vorderen Endes des Rahmens vorgesehen sind und die mindestens eine hintere Stütze zur Fixierung an dem Rahmen in einem Bereich des hinteren Endes des Rahmens vorgesehen ist, wobei in der fixierten Stellung die erste vordere Stütze und die zweite vordere Stütze in einer Querrichtung zu der Längsrichtung des Rahmens beabstandet sind und der Halter zwischen der ersten Stütze und der zweiten Stütze hindurch in Richtung der mindestens einen hinteren Stütze bringbar ist, und wobei die mindestens eine hintere Stütze in der Längsrichtung beabstandet zu der ersten vorderen Stütze und zu der zweiten Stütze ist, und wobei die erste Stütze und die zweite Stütze jeweils in einer Längsachse eine größere Länge aufweist als die mindestens eine hintere Stütze, wobei die Länge der Längsachse einen Höhenabstand des Rahmens zu dem Untergrund definiert, und dass bei an dem Rahmen fixierter Stützeinrichtung eine Abstützung an einem ebenen Untergrund der Rahmen in einem spitzen Winkel zu dem Untergrund orientiert ist.

Bei der erfindungsgemäßen Lösung ist in einer Ausgangsstellung für die Montage des Aufbaus (wie ein Tank, Streuer, Pritsche usw.) des Fahrzeugs der Rahmen in einem spitzen Winkel zu dem Untergrund orientiert. Dadurch ist es möglich, die Kippbarkeit des Halters auszunutzen, um den Halter an den Rahmen anzukoppeln.

Der kippbare Halter kann dazu genutzt werden, um für eine automatische Ankopplung an den Rahmen zu sorgen, und um den Rahmen dann zu bewegen, um die Stützeinrichtung zu lösen (bei einer Montage) beziehungsweise zu fixieren (bei der Demontage).

Durch den kippbaren Halter kann der Rahmen so verschwenkt werden, dass die erste vordere Stütze und die zweite vordere Stütze entfernbar sind. Durch die kleinere Länge der mindestens einen hinteren Stütze wiederum ist es möglich, bei einer solchen Kippbewegung eine Abstützung des Rahmens an dem Untergrund über die mindestens eine hintere Stütze zu erhalten.

Es ergibt sich so eine einfache kraftsparende Auswechselbarkeit eines Aufbaus an einem Fahrzeug. Während eines Wechselvorgangs müssen an Stützen der Stützeinrichtung keine Höhenverstellungen durchgeführt werden. Der einzige notwendige Kraftaufwand ist die Entfernung der ersten vorderen Stütze und der zweiten vorderen Stütze und dann zu einem späteren Zeitpunkt der mindestens einen hinteren Stütze. Bei einem Demontagevorgang ist der Kraftaufwand das Einsetzen der mindestens einen hinteren Stütze und zu einem späteren Zeitpunkt das Einsetzen der ersten vorderen Stütze und der zweiten vorderen Stütze.

Der Rahmen der Wechselvorrichtung ist ein "Wechselrahmen", welcher nach einem Montagevorgang an dem Fahrzeug bleibt und mit dem Halter des Fahrzeugs verbunden ist.

Nach einem Demontagevorgang ist der Rahmen von dem Fahrzeug entfernt, wobei der Aufbau an dem Rahmen sitzt.

Die erfindungsgemäße Wechselvorrichtung lässt sich auf konstruktiv einfache Weise mit einer minimierten Anzahl von Elementen ausbilden. Die erfindungsgemäße Wechselvorrichtung benötigt grundsätzlich keine aktiven Antriebe. Der Antrieb des kippbaren Halters (welcher beispielsweise ein hydraulischer Antrieb oder elektromotorischer Antrieb ist) wird für einen Wechselvorgang genutzt.

Wenn der Rahmen an dem Fahrzeug montiert ist, dann ist das vordere Ende des Rahmens einem vorderen Ende des Fahrzeugs (bezogen auf eine Vorwärtsfahrtrichtung des Fahrzeugs) zugewandt und das hintere Ende des Rahmens ist einem hinteren Ende des Fahrzeugs zugewandt.

Der spitze Winkel, in welchem der Rahmen zu dem Untergrund orientiert ist, liegt insbesondere im Bereich zwischen 10° und 50° und vorteilhafterweise in einem Bereich zwischen 10° und 30°. Beispielsweise liegt er im Bereich von circa 20°. Dadurch lässt sich auf einfache Weise ein Aufbau über den Rahmen an einem Fahrzeug montieren.

Bei einem Ausführungsbeispiel ist es vorgesehen, dass die Stützeinrichtung eine erste hintere Stütze und eine zweite hintere Stütze umfasst, welche in der Querrichtung beabstandet sind. Dadurch ergibt sich ein stabiler Aufbau der Wechselvorrichtung und ein Wechselvorgang lässt sich auf einfache Weise durchführen.

Ganz besonders vorteilhaft ist es, wenn die Stützen der Stützeinrichtung auf dem Untergrund fahrbar ausgebildet sind. Dadurch ergibt sich ein optimierter Wechselvorgang, wobei sich auch eine einfache Ausrichtbarkeit zwischen dem Rahmen und dem Halter ergibt. Beispielsweise ist die Fahrbarkeit eine Rollbarkeit über Rollen oder Räder oder eine Gleitbarkeit über Gleitelemente wie Kufen oder Kettenelemente.

Bei einem konstruktiv einfachen Ausführungsbeispiel weisen die Stützen eine Rolle oder ein Rad auf. Dadurch lässt sich auf einfache Weise eine Fahrbarkeit realisieren. Durch eine Fahrbarkeit der Wechselvorrichtung als Ganzes lässt sich beispielsweise auch die Wechselvorrichtung über ein Fahrzeug schieben. Es lässt sich auf einfache Weise eine optimierte Position von dem Halter zu dem Rahmen erreichen.

Ganz besonders vorteilhaft ist es, wenn die erste vordere Stütze und/oder die zweite vordere Stütze ein lenkbares Fahrelement wie ein Rad oder eine lenkbare Rolle oder auch lenkbare Gleitkufe umfassen. Dadurch lassen sich für die Ankopplung des Rahmens an den Halter Versatze und insbesondere seitliche Versatze auf einfache Weise ausgleichen. Dadurch ergibt sich eine einfache Wechselbarkeit, wobei die Notwendigkeit von Eingriffen durch einen Bediener minimierbar ist.

Es ist ferner günstig, wenn die mindestens eine hintere Stütze ein nichtlenkbares Fahrelement wie ein Rad oder eine Rolle umfasst. Durch das Vorsehen eines Rads oder einer Rolle lassen sich Ausgleichsvorgänge erreichen. Durch die Nichtlenkbarkeit lassen sich in Kombination mit einer Lenkbarkeit von Rädern oder Rollen der vorderen Stützen seitliche Versatze ausgleichen.

Es kann dabei vorgesehen sein, dass eine Länge einer Stütze in der Längsachse feststellbar einstellbar ist und insbesondere dass die Länge der ersten vorderen Stütze und der zweiten vorderen Stütze gleich ist oder gleich eingestellt ist. Während eines Wechselvorgangs wird die Länge einer Stütze nicht variiert. Durch die Einstellbarkeit ist es möglich, die Stütze an ein bestimmtes Fahrzeug anzupassen, um insbesondere die Kopplung des Halters an den Rahmen beziehungsweise die Entkopplung zu ermöglichen.

Ganz besonders vorteilhaft ist es, wenn der Rahmen eine Einfangeinrichtung und der Halter ein Gegenelement für die Einfangeinrichtung aufweist, wobei bei eingefangenem Gegenelement der Halter und der Rahmen miteinander gekoppelt sind und durch Kippen des Halters der Rahmen mitgekippt wird, insbesondere wenn sich die mindestens eine hintere Stütze am Untergrund abstützt.

Durch Kippen des Halters kann das Gegenelement an die Einfangeinrichtung angekoppelt werden. Durch die daraus resultierende Kopplung des Rahmens an den Halter kann der Rahmen über die Kippbewegung des Halters entsprechend bewegt werden. Dadurch lässt sich auf einfache Weise ein Wechselvorgang eines Aufbaus an dem Fahrzeug durchführen.

Insbesondere ist die Einfangeinrichtung im Bereich des vorderen Endes des Rahmens angeordnet. Dadurch lässt sich auf einfache Weise durch eine Kippbewegung des Halters der Halter an den Rahmen ankoppeln.

Bei einem Ausführungsbeispiel weist die Einfangeinrichtung mindestens ein Hakenelement für das Gegenelement auf. Das Gegenelement kann an dem Hakenelement "einhaken", um eine mechanische Kopplung zu erreichen.

Es ist dabei günstig, wenn das mindestens eine Hakenelement eine Einführungsausnehmung aufweist, welche quer zu der Querrichtung und quer zu der Längsrichtung des Rahmens offen ist. Dadurch kann bei entsprechender Ausrichtung zwischen dem Rahmen und dem Halter das Gegenelement in die Einführungsausnehmung durch eine Kippbewegung des Halters eintauchen. Es lässt sich über eine entsprechende Abstützfläche an der Einführungsausnehmung eine Kopplung erreichen, durch welche wiederum eine Mitnahmebewegung des Rahmens durch den Halter ermöglicht ist.

Bei einer konstruktiv einfachen Ausführungsform ist das Gegenelement ein Rundstab. Dieser Rundstab bildet beispielsweise eine Querstrebe an dem Halter, welcher rahmenförmig ausgebildet ist. Es lässt sich dadurch ein einfaches Eintauchen in eine Einführungsausnehmung eines Hakenelements erreichen. Der Rundstab kann auch ein Bolzen oder Zapfen sein. Der Rundstab kann über seinen gesamten Außenumfang rund sein oder nur in einem Teilbereich rund sein.

Bei einem konstruktiv günstigen Ausführungsbeispiel ist an dem Rahmen mindestens eine Lasche mit der Einfangeinrichtung angeordnet. Dadurch lässt sich der Rahmen (Wechselrahmen) auf einfache Weise ausbilden. Die Lasche kann mehrere Funktionen übernehmen. Neben dem Halten der Einfangeinrichtung kann sie dazu dienen, eine entsprechende vordere Stütze zu halten beziehungsweise abzustützen. Eine Fixierung einer vorderen Stütze kann an der Lasche erfolgen. Ferner können an der Lasche Führungseinrichtungen für den Halter vorgesehen werden, welche für eine relative Ausrichtung zwischen dem Halter und dem Rahmen sorgen. Ferner können an der Lasche eine oder mehrere Formschlussausnehmungen vorgesehen werden für die Kopplung zwischen Halter und Rahmen.

Es ist dann vorteilhaft, wenn an der mindestens einen Lasche die erste vordere Stütze und/oder die zweite vordere Stütze lösbar fixierbar sind. Dadurch lässt sich der Rahmen mit der erforderlichen Funktionalität auf einfache Weise aufbauen.

Es ist dann insbesondere günstig, wenn die mindestens eine Lasche eine Stützfläche für die erste vordere Stütze und/oder die zweite vordere Stütze aufweist. Es ergibt sich dadurch ein einfacher Aufbau.

Es ist ferner günstig, wenn an der mindestens einen Lasche eine Führungseinrichtung für den Halter angeordnet ist. Dadurch lässt sich auf einfache Weise eine Ausrichtung zwischen dem Halter und dem Rahmen erreichen.

Bei einem Ausführungsbeispiel umfasst der Rahmen eine Aufnahme, in welche die mindestens eine hintere Stütze mit einem Eintauchbereich einsteckbar ist.

Dadurch lässt sich auf einfache Weise die mindestens eine hintere Stütze an dem Rahmen fixieren.

Insbesondere ist eine Einsetzrichtung mindestens näherungsweise parallel zu der Längsrichtung des Rahmens. Dadurch lässt sich ein Zwischenraum an der Wechselvorrichtung, durch welchen hindurch das Fahrzeug mit dem Halter bringbar ist, nach hinten durch die mindestens eine hintere Stütze begrenzen. Dadurch wiederum ist es möglich, die mindestens eine hintere Stütze zu Positionierungszwecken zu nutzen. Es ergibt sich dadurch bei einfachem konstruktivem Aufbau der Wechselvorrichtung eine optimierte Bedienbarkeit.

Insbesondere liegt der Eintauchbereich der mindestens einen hinteren Stütze in einem Winkel zu einer Längsachse der mindestens einen hinteren Stütze orientiert, wobei der Winkel insbesondere im Bereich zwischen 100° und 140° liegt. Dadurch lässt sich auf einfache Weise eine Orientierung des Rahmens in einem spitzen Winkel zu dem Untergrund erreichen.

Es ist ferner günstig, wenn eine Einsetzrichtung der ersten vorderen Stütze und/oder der zweiten vorderen Stütze quer zu der Einsetzrichtung der mindestens einen hinteren Stütze liegt. Es lässt sich dadurch eine Art von Vorderportal an der Wechselvorrichtung bereitstellen, durch welche hindurch ein Fahrzeug mit einem Halter bringbar ist. Die erste vordere Stütze und die zweite vordere Stütze lassen sich dann seitlich wegnehmen beziehungsweise einsetzen. Dadurch ergibt sich eine optimierte Zugänglichkeit.

Bei einem Ausführungsbeispiel sind an dem Rahmen beabstandete Führungselemente für den Halter angeordnet und/oder an dem Halter sind beabstandete Führungselemente für den Rahmen angeordnet. Es lässt sich dadurch bei der Kopplung zwischen Halter und Rahmen eine optimierte Ausrichtung erreichen. Ferner lässt sich ein Formschluss beispielsweise in der Querrichtung erreichen.

Insbesondere ragt ein Führungselement über den Rahmen in Richtung des Halters hinaus und/oder über den Halter in Richtung des Rahmens hinaus, um eine entsprechende Kopplung und/oder einen Formschluss zu erreichen.

Günstigerweise ist eine Fixierungseinrichtung vorgesehen, über welche der Rahmen und/oder der Aufbau mit dem Halter in einem Bereich des hinteren Endes des Rahmens fixierbar ist. Diese Fixierungseinrichtung umfasst beispielsweise Bolzen, um für eine endgültige Fixierung zwischen dem Rahmen und dem Halter zu sorgen.

Ganz besonders vorteilhaft ist es, wenn an der mindestens einen hinteren Stütze und/oder an dem Rahmen ein Führungselement für den Halter und/oder das Fahrzeug angeordnet ist. Durch das Führungselement lässt sich beispielsweise ein seitlicher Versatz ausgleichen beziehungsweise es wird ein Anschlag für eine Endposition des Fahrzeugs relativ zu dem Rahmen bereitgestellt.

Günstigerweise liegt das Führungselement in einem spitzen Winkel zu einer Längsachse der mindestens einen hinteren Stütze. Dadurch lässt sich im Zusammenhang mit einer fahrbaren Wechselvorrichtung ein seitlicher Versatz ausgleichen.

Es ist dann günstig, wenn das mindestens eine Führungselement von dem Rahmen weg nach außen weist, wenn die entsprechende Stütze an dem Rahmen fixiert ist. Dadurch lässt sich unter optimierter Platznutzung auf einfache Weise ein Ausgleich insbesondere eines seitlichen Versatzes zwischen Fahrzeug und Rahmen erreichen.

Insbesondere liegt das Führungselement in einem spitzen Winkel zu einer Ebene, welche eine Längsachse der mindestens einen hinteren Stütze enthält, und/oder ist in einem spitzen Winkel zu einer Ebene angeordnet, welche quer zu der Längsachse orientiert ist. Es lässt sich dadurch auf einfache Weise ein Ausgleich eines Versatzes erreichen.

Es ist ferner günstig, wenn an dem Führungselement ein Anschlag für den Halter und/oder das Fahrzeug angeordnet ist, welche insbesondere mindestens näherungsweise parallel zu der Querrichtung des Rahmens orientiert ist. Durch den Halter ist eine Endposition des Rahmens zu dem Halter definiert. Wenn diese Endposition erreicht ist, dann kann durch eine Kippbewegung des Halters eine Kopplung des Halters an den Rahmen erfolgen.

Ganz besonders vorteilhaft ist es, wenn mindestens eine erste hintere Stütze und eine zweite hintere Stütze vorgesehen sind, welche jeweils ein Führungselement aufweisen, wobei an dem Rahmen angeordneter erster hinteren Stütze und zweiter hinteren Stütze eine durch die Führungselemente definierte Führungseinrichtung sich verjüngt, wobei bei auf ebenem Untergrund aufgesetzter Stützeinrichtung die Verjüngung in einer Richtung parallel zum Untergrund orientiert ist und/oder senkrecht zum Untergrund orientiert ist. Insbesondere bei paralleler Orientierung lässt sich durch die Verjüngung ein seitlicher Versatz ausgleichen. Es wird eine Art von Einführtrichter bereitgestellt. Wenn beispielsweise das Fahrzeug rückwärts zwischen der ersten vorderen Stütze und der zweiten vorderen Stütze hindurch mit dem Halter unter den Rahmen gefahren wird, dann kann über die Führungseinrichtung und Anlage an das Fahrzeug und/oder den Halter, insbesondere in Kombination mit einer fahrbaren Ausbildung der Stützeinrichtung, die Wechselvorrichtung sich so bewegen, dass eine Zentrierung erreicht ist. In der dann erreichten endgültigen Position ist dann auf einfache Weise ein Wechselvorgang möglich.

Es ist dann günstig, wenn an dem Halter und/oder dem Fahrzeug ein oder mehrere Anlagebereiche zur Kooperation mit dem Führungselement angeordnet sind, wobei insbesondere das Führungselement an einem Anlagebereich gleitbar ist. Dadurch ergibt sich eine optimierte Positionierung zwischen dem Halter und dem Rahmen in Vorbereitung eines Wechselvorgangs.

Die eingangs genannte Kombination aus einem Fahrzeug und einem kippbaren Halter, und dem mindestens einen Aufbau weist ferner eine erfindungsgemäße Wechselvorrichtung auf.

Insbesondere weist dabei der Halter eine Kippachse auf, welche im Bereich eines hinteren Endes des Fahrzeuges, bezogen auf eine Vorwärtsfahrtrichtung angeordnet ist. Dadurch lässt sich die Verkippung des Halters auch für einen Wechselvorgang nutzen.

Erfindungsgemäß wird ein Verfahren zum Wechsel eines Aufbaus bei einem Fahrzeug mit einem kippbaren Halter für den Aufbau unter Verwendung einer erfindungsgemäßen Wechselvorrichtung bereitgestellt.

Für die Montage eines Aufbaus an dem Halter sind folgende Schritte vorgesehen:
- Bringen des Rahmens mit fixiertem Aufbau und mit fixierter Stützeinrichtung über den Halter, wobei sich die Stützeinrichtung am Untergrund abstützt;
- Kippen des Halters durch Anheben in Richtung des Rahmens und Ankopplung des Halters an den Rahmen;
- weiteres Kippen des Halters unter Mitnahme des Rahmens bei an dem Untergrund abgestützter mindestens einer hinteren Stütze des Rahmens durch Anheben bis die erste vordere Stütze und die zweite vordere Stütze vom Untergrund abgehoben sind;
- Entfernen der ersten vorderen Stütze und der zweiten vorderen Stütze von dem Rahmen;
- Zurückkippen des Halters mit dem Rahmen, wobei die mindestens eine hintere Stütze von dem Untergrund abgehoben wird; und
- Entfernung der mindestens einen hinteren Stütze.

Zur Demontage eines Aufbaus, welcher über den Rahmen an dem Halter fixiert ist, sind folgende Schritte vorgesehen:
- Fixierung der mindestens einen hinteren Stütze an dem Rahmen, wobei die mindestens eine hintere Stütze von dem Untergrund beabstandet ist;
- Kippen des Halters mit angekoppeltem Rahmen durch Anheben bis sich die mindestens eine hintere Stütze an dem Untergrund abstützt und die erste vordere Stütze und die zweite vordere Stütze beabstandet zu dem Untergrund an dem Rahmen fixierbar sind;
- Fixierung der ersten vorderen Stütze und der zweiten vorderen Stütze an dem Rahmen;
- Absenken des Halters mit angekoppeltem Rahmen durch Kippen bis die erste vordere Stütze und die zweite vordere Stütze sich auf dem Untergrund abstützen;
- Entkopplung des Halters von dem Rahmen und weiteres Absenken des Halters ohne Rahmen durch Kippen; und
- Wegbringen des Rahmens mit der Stützeinrichtung und dem Aufbau von dem Halter.

Durch das erfindungsgemäße Verfahren lässt sich mit minimalem körperlichem Aufwand durch einen (einzigen) Bediener auf einfache Weise ein Wechselvorgang (Montage beziehungsweise Demontage eines Aufbaus über den Rahmen an dem Halter) durchführen. Die Wechselvorrichtung selber benötigt keinen aktiven Antrieb. Der Antrieb zur Kippbewegung des Halters wird optimiert genutzt.

Insbesondere wird bei der Montage des Aufbaus der Aufbau mit dem Halter in einem Bereich des hinteren Endes des Rahmens fixiert, wobei der Rahmen an den Halter in einen Bereich des vorderen Endes des Rahmens gekoppelt ist und/oder zum Abnehmen des Aufbaus wird eine Fixierung des Rahmens am Halter im Bereich des hinteren Endes des Rahmens gelöst. Die Fixierung im Bereich des hinteren Endes ist der abschließende Vorgang einer Montage eines Aufbaus beziehungsweise bei der Demontage ist das Lösen der Fixierung der erste Schritt.

Zum Bringen des Rahmens mit fixierter Stützeinrichtung über den Halter wird das Fahrzeug unter den Rahmen gefahren und/oder der Rahmen mit der Stützeinrichtung wird über den Halter gefahren; zum Wegbringen des Rahmens von dem Halter wird das Fahrzeug von dem Rahmen weggefahren und/oder der Rahmen wird mit der Stützeinrichtung von dem Fahrzeug weggefahren. Es lässt sich dadurch auf einfache Weise eine entsprechende relative Positionierung zwischen dem Halter und dem Rahmen erreichen. Das Fahren kann beispielsweise ein Rollen sein oder ein Gleiten.

Günstig ist es, wenn Führungselemente an dem Rahmen und/oder an der Stützeinrichtung für eine Ausrichtung des Halters zu dem Rahmen sorgen. Dadurch lässt sich auf optimierte Weise eine Kopplung zwischen dem Halter und dem Rahmen erreichen.

Es ist ferner günstig, wenn lenkbare Fahrelemente wie Rollen, Räder oder Kufen an der ersten vorderen Stütze und/oder der zweiten vorderen Stütze für eine Ausrichtung des Halters zu dem Rahmen sorgen. Dadurch lässt sich auf einfache Weise ein seitlicher Versatz ausgleichen und es lässt sich auf automatische Weise eine optimierte Ausgangsstellung zwischen Halter und Rahmen erreichen.

Insbesondere wird für die Montage des Aufbaus ein hinteres Ende des Halters oder ein hinteres Ende des Fahrzeugs in Kontakt mit der mindestens einen hinteren Stütze gebracht. Dadurch lässt sich auf einfache Weise eine optimierte Ausrichtung zwischen dem Rahmen und dem Halter für einen Wechselvorgang erreichen.

Die nachfolgende Beschreibung bevorzugter Ausführungsformen dient im Zusammenhang mit den Zeichnungen der näheren Erläuterung der Erfindung. Es zeigen:
- Figur 1: eine schematische Teildarstellung eines Ausführungsbeispiels eines Fahrzeugs mit einem kippbaren Halter für einen Aufbau, wobei der Aufbau nicht montiert ist;
- Figur 2: die gleiche Ansicht wie Figur 1 mit dem Halter in einer Kippstellung;
- Figur 3: ein Ausführungsbeispiel eines Halters in einer Ansicht in der Richtung A gemäß Figur 1;
- Figur 4: den Halter gemäß Figur 3 in einer Ansicht gemäß der Richtung B aus Figur 1;
- Figur 5: ein Ausführungsbeispiel eines Rahmens zur Fixierung an dem Fahrzeug gemäß Figur 1, wobei ein an dem Rahmen montierter Aufbau in durchbrochenen Linien angedeutet ist;
- Figur 6: eine Ansicht des Rahmens gemäß Figur 5 in der Richtung C;
- Figur 7: eine Ansicht des Rahmens gemäß Figur 5 in der Richtung D;
- Figur 8: ein Ausführungsbeispiel einer vorderen Stütze;
- Figur 9: ein Ausführungsbeispiel einer hinteren Stütze in perspektivischer Darstellung;
- Figur 10: eine Seitenansicht der hinteren Stütze gemäß Figur 9;
- Figur 11: eine Draufsicht auf die hintere Stütze gemäß Figur 9;
- Figur 12: ein weiteres Ausführungsbeispiel einer hinteren Stütze;
- Figur 13: ein Ausführungsbeispiel einer Wechselvorrichtung zur Montage beziehungsweise zum Abnehmen eines Aufbaus an beziehungsweise von einem Halter;
- Figur 14(a) bis (h): verschiedene Schritte bei der Montage eines Aufbaus an dem Halter eines Fahrzeugs mit einem Ausführungsbeispiel einer erfindungsgemäßen Wechselvorrichtung;
- Figur 15(a), (b): verschiedene Schritte für das Abnehmen eines Aufbaus von dem Halter eines Fahrzeugs mittels eines Ausführungsbeispiels einer erfindungsgemäßen Wechselvorrichtung; und
- Figur 16(a) bis (c): verschiedene Schritte bei einem Anfahren des Halters an eine hintere Stütze.

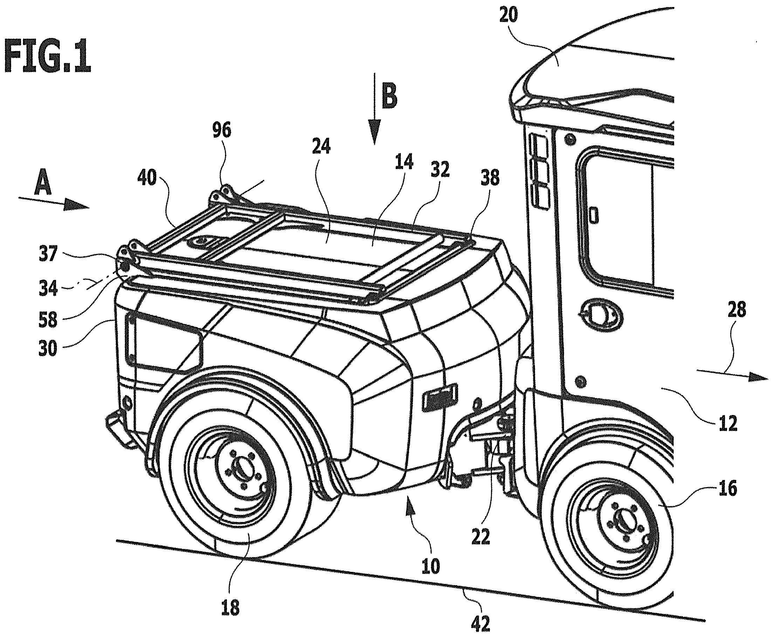

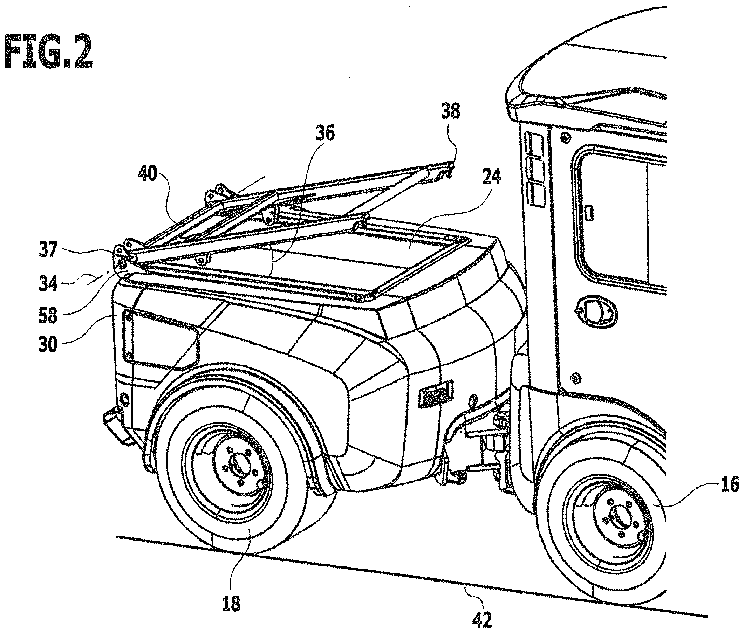

Ein Ausführungsbeispiel eines Fahrzeugs 10 (beispielsweise Figuren 1 und 2) umfasst einen Vorderwagen 12 und einen Hinterwagen 14. An dem Vorderwagen 12 ist eine Vorderradeinrichtung 16 angeordnet. An dem Hinterwagen 14 ist eine Hinterradeinrichtung 18 angeordnet.

Beispielsweise sitzt an dem Vorderwagen 12 eine Fahrerkabine 20. Bei einem Ausführungsbeispiel sind der Vorderwagen 12 und der Hinterwagen 14 über eine Knicklenkereinrichtung 22 miteinander verbunden.

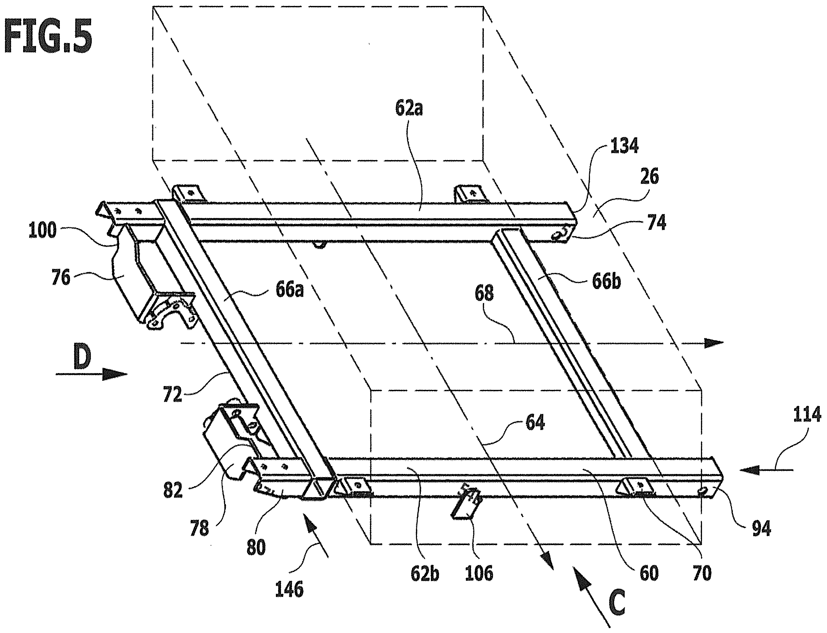

An dem Hinterwagen 14 ist ein Aufnahmebereich 24 für einen Aufbau 26 (siehe beispielsweise Figur 5) angeordnet. Der Aufbau 26 ist wechselbar. Bei dem Aufbau 26 handelt es sich beispielsweise um eine Pritsche, einen Tank, einen Streuer usw.

Beispielsweise ist an dem Hinterwagen 14 und insbesondere unterhalb des Aufnahmebereichs 24 ein Motor insbesondere für den Fahrantrieb des Fahrzeugs 10 angeordnet.

Das Fahrzeug 10 hat eine Vorwärtsfahrtrichtung 28. Bezogen auf die Vorwärtsfahrtrichtung 28 hat das Fahrzeug 10 ein vorderes Ende und ein hinteres Ende 30.

An dem Hinterwagen 14 ist ein Halter 32 angeordnet. Der Halter 32 dient zur Fixierungsmontage des Aufbaus 26 an dem Fahrzeug 10 und dabei an dem Hinterwagen 14. Der Halter 32 bildet eine Plattform zur Fixierung des Aufbaus 26.

Der Halter 32 ist dabei um eine Achse 34 kippbar an dem Hinterwagen 14 angeordnet.

In Figur 1 ist eine Stellung des Halters 32 gezeigt, bei welcher dieser nicht gekippt ist. In Figur 2 ist eine Stellung des Halters 32 gezeigt, bei welcher dieser um die Achse 34 gekippt ist und dabei in einem Winkel 36 zu dem Hinterwagen 14 liegt.

Über den kippbaren Halter 32 kann ein Aufbau 26 gegenüber dem Hinterwagen 14 gekippt werden.

Die Achse 34 und ein entsprechend zugeordnetes Kipplager 37 ist an dem Fahrzeug 10 an dem Hinterwagen 14 im Bereich des hinteren Endes 30 positioniert. Bei einer Kippbewegung ausgehend von einer Ausgangsstellung (Figur 1; in der Ausgangsstellung ist der Winkel 36 zu dem Aufnahmebereich 24 mindestens näherungsweise ein Null-Winkel) vergrößert sich durch Vergrößerung des Winkel 36 ein Abstand eines vorderen Endes 38 des Halters 32 zu dem Aufnahmebereich 24. Der Abstand eines hinteren Endes 40 zu dem Aufnahmebereich 24 bleibt durch die Kippbewegung mindestens näherungsweise konstant.

Wenn das Fahrzeug 10 auf einen ebenen Untergrund 42 über die Vorderradeinrichtung 16 und die Hinterradeinrichtung 18 aufsteht, dann vergrößert sich bei einer Kippbewegung durch Vergrößerung des Winkels 36 die Winkelstellung des Halters 32 zu dem Untergrund 42.

Der Halter 32 ist fest an dem Hinterwagen 14 mit der genannten Kippbeweglichkeit angeordnet.

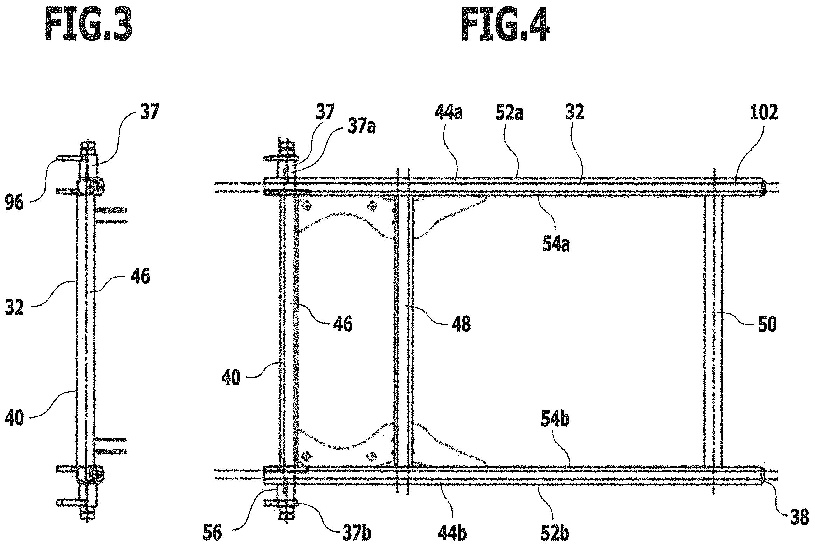

Bei einem Ausführungsbeispiel (Figur 3, 4) ist der Halter 32 als Rahmen ausgebildet. Er umfasst gegenüberliegende Rahmenleisten 44a, 44b. Diese sind in einer Richtung quer zu einer Abstandsrichtung zwischen dem vorderen Ende 38 und dem hinteren Ende 40 beabstandet.

Die Rahmenleisten 44a, 44b sind durch Querstreben 46, 48, 50 miteinander verbunden. Die Querstreben 46, 48, 50 sind in der Längsrichtung zwischen dem vorderen Ende 38 und dem hinteren Ende 40 beabstandet.

Die Querstrebe 46 ist im Bereich des Schwenklagers 37 angeordnet. Die Rahmenleisten 44a, 44b weisen einander abgewandte Außenseiten 52a, 52b und einander zugewandte Innenseiten 54a, 54b auf. Die Querstreben 46, 48, 50 verlaufen zwischen den Innenseiten 54a, 54b.

Das Schwenklager 37 mit seinen Teilbereichen 37a, 37b liegt an einem entsprechenden Stummel 56, welcher beispielsweise eine Verlängerung der Querstrebe 46 an der Außenseite 52a, 52b ist oder zumindest von der Außenseite 52a, 52b weg weist. Die Teilbereiche 37a, 37b des Schwenklagers 37 liegen damit außerhalb der Rahmenstruktur des Halters 32, das heißt nicht zwischen den Innenseiten 54a, 54b.

Die Querstrebe 50 liegt in der Nähe des vorderen Endes 38 des Halters 32. Die Querstrebe 50 ist insbesondere als Grundstab ausgebildet, wobei die Querstrebe 50 vorzugsweise einen kreisrunden Querschnitt hat.

Der Halter 32 ist schwenkbar (kippbar) an einer Gegenstruktur 58 fixiert, welche fest mit dem Aufnahmebereich 24 des Hinterwagens 14 verbunden ist.

Der Aufbau 26 wird an dem Halter 24 und damit an dem Fahrzeug 10 über einen Rahmen 60 (Figur 5) fixiert. Der Rahmen 60 ist eine Art von Wechselrahmen.

Bei einem Ausführungsbeispiel umfasst der Rahmen Rahmenleisten 62a, 62b, welche in einer Querrichtung 64 zueinander beabstandet sind. Die Rahmenleisten 62a, 62b sind mit Querstreben 66a, 66b miteinander verbunden. Diese Querstreben 66a, 66b sind in einer Längsrichtung 68, welche senkrecht zu der Querrichtung 64 ist, zueinander beabstandet.

Die Rahmenleisten 62a, 62b und/oder die Querstreben 66a, 66b sind beispielsweise durch metallische Rechteckprofile gebildet.

Bei einem Ausführungsbeispiel sind an den Rahmenleisten 62a, 62b Laschen 70 angeordnet, über welche der Aufbau 26 an dem Rahmen 60 beispielsweise durch Verschraubung oder Verbolzung fixierbar ist beziehungsweise fixiert ist.

Der Rahmen 60 hat ein vorderes Ende 72 und ein hinteres Ende 74. Diese sind in der Längsrichtung 68 zueinander beabstandet.

Im Bereich des vorderen Endes 72 sitzen an der Querstrebe 66a beabstandete Laschen 76, 78. Die Laschen 76, 78 sind kastenförmig ausgebildet. Sie sind an einem jeweiligen Leistenstummel 80, welche beispielsweise eine Fortsetzung der Rahmenleisten 62a, 62b zu dem vorderen Ende 72 sind, und der Querstrebe 66a fixiert. Durch den entsprechenden Leistenstummel 80 und eine Oberseite der Lasche 76 beziehungsweise 78 ist eine Auflagefläche 82 für jeweils eine Stütze einer Stützeinrichtung gebildet, wie untenstehend noch näher erläutert wird. Die entsprechende Stütze ist an der Lasche 76 beispielsweise durch Verschraubung oder Verbolzung fixierbar.

An der jeweiligen Lasche 76 und 78 ist eine Einfangeinrichtung 84 gebildet. Die Einfangeinrichtung 84 dient zum Einfangen der Querstrebe 50 des Halters 32, wie untenstehend noch näher erläutert wird. Über die Einfangeinrichtung 84 ist an der Querstrebe 50 der Rahmen 60 mit dem Halter 32 koppelbar, so dass insbesondere durch eine Kippbewegung des Halters 32 eine Kippbewegung des Rahmens 60 durchführbar ist.

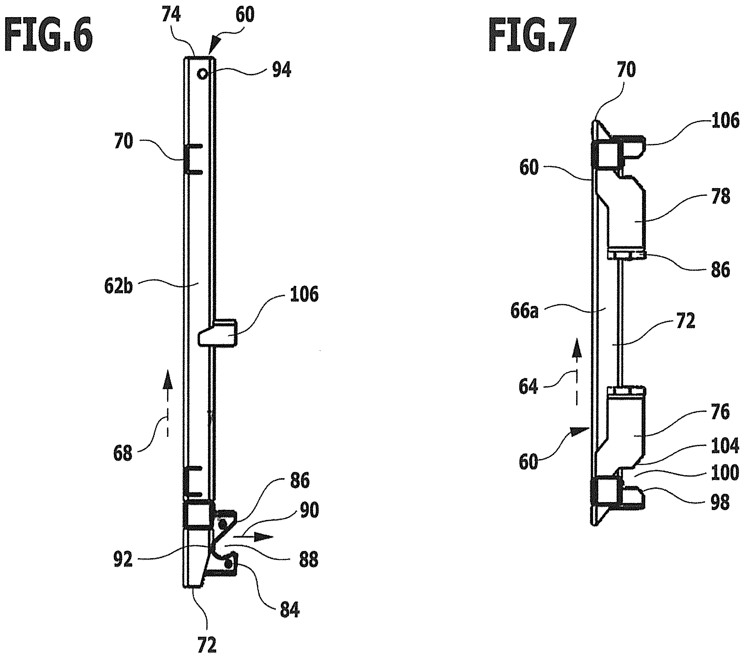

Die Einfangeinrichtung umfasst dabei an der Lasche 76 und der Lasche 78 jeweils ein Hakenelement 86. Das entsprechende Hakenelement 86 (beispielsweise Figur 6) weist eine Einführungsausnehmung 88 auf. Diese Einführungsausnehmung 88 hat eine Mündung, welche in einer Richtung 90 offen ist. Die Richtung 90 liegt dabei quer zu der Längsrichtung 68 und quer zu der Querrichtung 64. Dadurch kann die Querstrebe 50 gewissermaßen von unten her in die Einführungsausnehmung 88 eingeführt werden.

Die Einführungsausnehmung 88 weist ferner eine Abstützfläche 92 auf. Über die Abstützfläche erfolgt eine Kopplung des Rahmens 60 an den Halter 32. Das Hakenelement 86 mit der Einführungsausnehmung 88 und der Abstützfläche 92 ist dabei insbesondere so ausgebildet, dass, wenn die Querstrebe 50 in der Einführungsausnehmung 88 sitzt und an der Abstützfläche 92 abgestützt ist und der Halter 32 in seiner Ausgangsstellung ist (ohne Kippung), die Kopplung des Rahmens 60 mit dem Aufbau 26 an den Halter 32 derart ist, dass eine zusätzliche Fixierung beispielsweise über Bolzen oder Schrauben des Rahmens 60 im Bereich des hinteren Endes 74 mit dem Halter 32 und dort insbesondere im Bereich des hinteren Endes 40 ausreichend ist.

Zu diesem Zweck ist insbesondere im Bereich des hinteren Endes 74 des Rahmens 60 und dort bei insbesondere den Rahmenleisten 62a, 62b eine entsprechende Einrichtung 94 angeordnet. Diese Einrichtung 94 weist beispielsweise Ausnehmungen für Bolzen oder dergleichen auf, um beispielsweise eine Fixierung durch Verbolzung des Rahmens 60 mit dem Halter 32 zu ermöglichen. Der Halter 32 weist dazu eine entsprechende Gegeneinrichtung 96 auf. Diese ist insbesondere an den Stummel 56 angeordnet und beispielsweise durch entsprechende Laschen an den Stummeln 56 gebildet.

An den Laschen 76, 78 ist eine Führungseinrichtung 98 (Figur 7) für den Halter 32 angeordnet. Die Führungseinrichtung 98 umfasst jeweils eine an der Lasche 76 beziehungsweise 78 angeordnete Ausnehmung 100. In diese Ausnehmung 100 ist die Rahmenleiste 44a beziehungsweise 44b mit einem Bereich 102 jenseits der Querstrebe 50 (zu dem vorderen Ende 38 hin) bringbar. Dadurch lässt sich eine relative Führung zwischen dem Halter 32 und dem Rahmen 60 erreichen. Dies wird untenstehend noch näher erläutert.

Die Ausnehmung 108 weist dabei eine Mündung 104 zum Einführen dieser Bereiche 102 auf. An dieser Mündung 104 verbreitert sich die Ausnehmung 100 trichterförmig, um das Einführen zu erleichtern.

Weiterhin sind an dem Rahmen 60 beabstandete Führungselemente 106 angeordnet. Die Führungselemente 106 sind dabei insbesondere an den Rahmenleisten 62a, 62b angeordnet. Sie weisen nach unten zu dem Halter 32 hin. Sie dienen dazu, die Ankopplung des Halters 32 an den Rahmen 60 zu erleichtern und dabei für eine optimierte Ausrichtung zu sorgen.

Die Führungselemente 106 sind beispielsweise durch Winkelelemente gebildet.

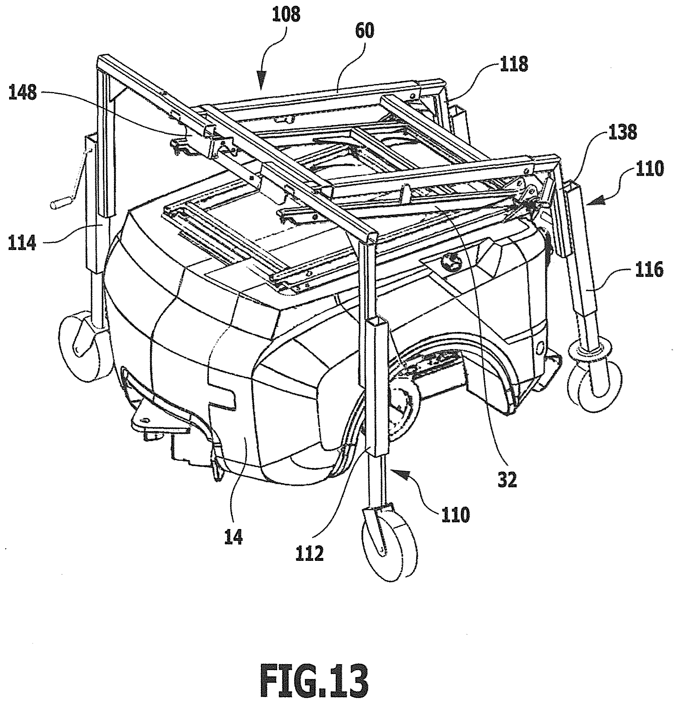

Zum Wechseln eines Aufbaus 26 an dem Fahrzeug 10 ist eine Wechselvorrichtung 108 gesehen (vgl. beispielsweise Figur 13). Die Wechselvorrichtung 108 dient dazu, an einem "leeren" Halter 32 des Fahrzeugs 10 einen Aufbau 26 zu montieren, oder um einen an dem Halter 32 fixierten Aufbau 26 zu demontieren.

Der Rahmen 60 ist Teil der Wechselvorrichtung 108.

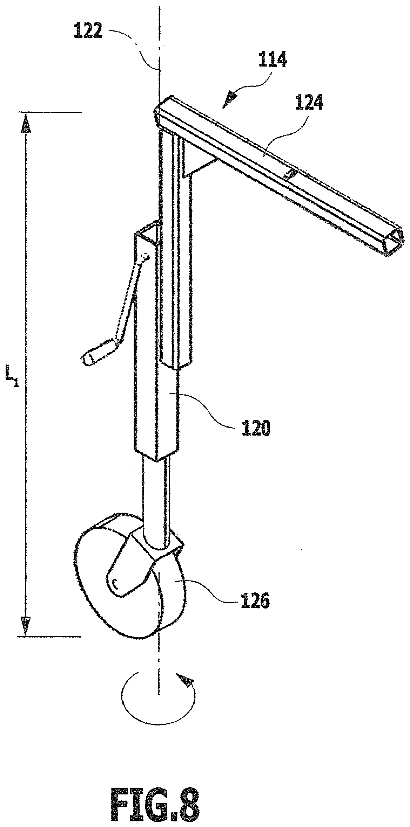

Bei einem Ausführungsbeispiel umfasst die Wechselvorrichtung 108 (vgl. die Figuren 8 bis 13) eben den Rahmen 60. Sie umfasst ferner eine Stützeinrichtung 110, welche lösbar an dem Rahmen 60 fixierbar ist, und über welche sich der Rahmen 60 mit daran fixiertem Aufbau 26 an dem Untergrund 42 abstützen lässt.

Bei einem Ausführungsbeispiel umfasst die Stützeinrichtung 110 eine erste vordere Stütze 112, eine zweite vordere Stütze 114, eine erste hintere Stütze 116, und eine zweite hintere Stütze 118. Die erste vordere Stütze 112 und die zweite vordere Stütze 114 sind dabei grundsätzlich gleich ausgebildet. Die erste hintere Stütze 116 und die zweite hintere Stütze 118 sind ebenfalls grundsätzlich gleich ausgebildet, wobei die hinteren Stützen 116, 118 unterschiedlich bezüglich der vorderen Stützen 112, 114 ausgebildet sein können.

Die erste vordere Stütze 112 und die zweite vordere Stütze 114 (vgl. Figur 8) umfassen ein Element 120, welches sich in einer Längsrichtung 122 erstreckt. Es ist dabei grundsätzlich möglich, dass das Stützelement 120 starr ausgebildet ist. Bei einem Ausführungsbeispiel, welches in Figur 8 gezeigt ist, ist eine Länge des Stützelements 120 in der Längsrichtung 122 einstellbar. Dazu ist an dem Stützelement 120 beispielsweise ein Kurbeltrieb angeordnet.

An einem Ende des Stützelements 120 sitzt ein Stab 124. Der Stab 124 ist dabei insbesondere quer und vorzugsweise senkrecht zu der Längsrichtung 122 orientiert. Über diesen Stab 124 lässt sich die erste vordere Stütze 112 beziehungsweise die zweite vordere Stütze 114 an der zugeordneten Lasche 76 beziehungsweise 78 fixieren.

An dem gegenüberliegenden Ende des Stützelements 120 ist eine Rolle 126 angeordnet. Die Rolle 126 ist dabei lenkbar, das heißt sie kann sich um eine Achse parallel beziehungsweise koaxial zur Längsachse 122 drehen.

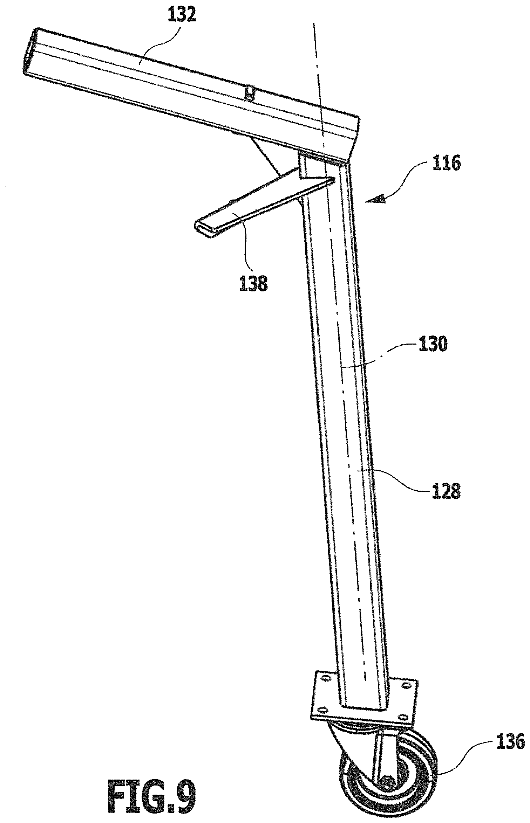

Die erste hintere Stütze 116 und die zweite hintere Stütze 118 (Figuren 9 bis 12), weisen ein Stützelement 128 auf, welches sich in einer Längsachse 130 erstreckt. Bei dem in den Figuren 9 bis 11 gezeigten Ausführungsbeispiel ist das Stützelement 128 ein starrer Stab, dessen Höhe nicht einstellbar ist.

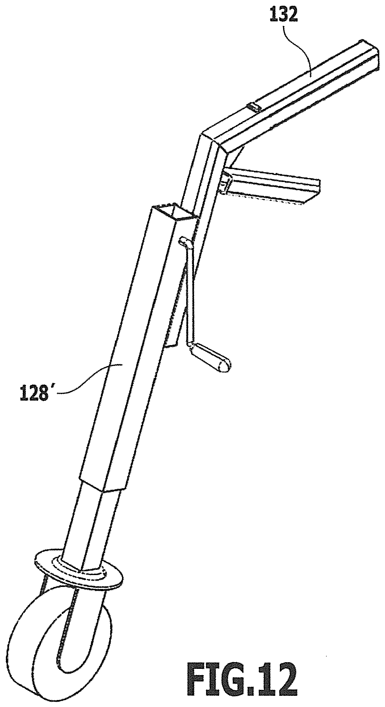

Bei dem in Figur 12 gezeigten Ausführungsbeispiel ist ein Stützelement 128' vorgesehen, dessen Länge in der Längsachse 130 feststellbar einstellbar ist. Dazu ist beispielsweise ein Kurbeltrieb vorgesehen.

An einem Ende des Stützelements 128 beziehungsweise 128' ist ein Eintauchbereich 132 angeordnet. Dieser Eintauchbereich ist beispielsweise durch einen Stab gebildet, welcher fest mit dem Stützelement 128 beziehungsweise 128' verbunden ist.

Die Rahmenleisten 62a, 62b weisen jeweils eine Aufnahme 133 im Bereich des hinteren Endes 74 auf, in welche die zugeordnete erste hintere Stütze 116 beziehungsweise zweite hintere Stütze 118 mit ihrem jeweiligen Eintauchbereich 132 einsteckbar ist. Eine entsprechende Einsteckstellung ist beispielsweise durch einen Bolzen oder dergleichen sicherbar.

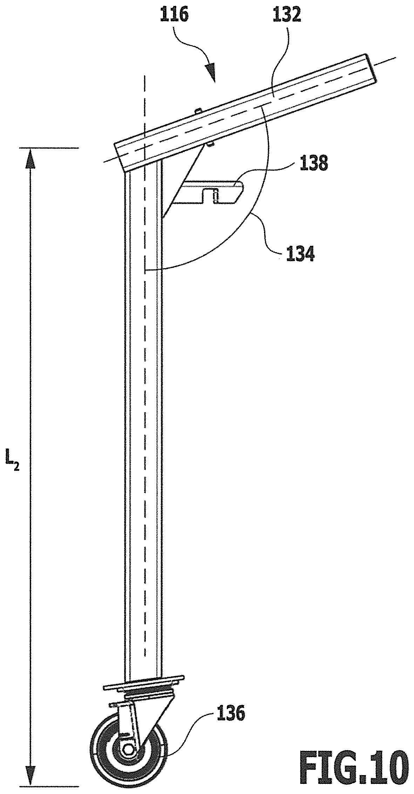

Der Eintauchbereich 132 liegt in einem Winkel 134 (vgl. beispielsweise Figur 10) zu der Längsachse 130. Dieser Winkel 134 ist größer als 90° und liegt beispielsweise im Bereich zwischen 100° und 140°. Beispielsweise liegt dieser Winkel 134 bei circa 110°.

An einem gegenüberliegenden Ende des Stützelements 128, 128' ist eine Rolle 136 angeordnet. Diese Rolle 136 ist nicht lenkbar. Eine Rollrichtung der Rolle 136 der ersten hinteren Stütze 116 beziehungsweise der zweiten hinteren Stütze 118 liegt, wenn die erste hintere Stütze 116 und die zweite hintere Stütze 118 an dem Rahmen 60 fixiert sind, parallel zu einer Projektion der Längsrichtung 68 auf dem Untergrund 42, auf welchem die Wechselvorrichtung 108 mittels ihrer Stützeinrichtung 110 aufsteht.

Zur Fixierung der ersten hinteren Stütze 116 und der zweiten hinteren Stütze 118 an dem Rahmen 60 kann beispielsweise auch die Einrichtung 94 verwendet werden.

Die erste hintere Stütze 116 und die zweite hintere Stütze 118 weisen jeweils ein Führungselement 138 auf. Dieses Führungselement 138 dient zum Ausgleichen eines eventuellen Versatzes beim Einbringen des Halters 32 unterhalb des Rahmens 60, wie untenstehend näher beschrieben.

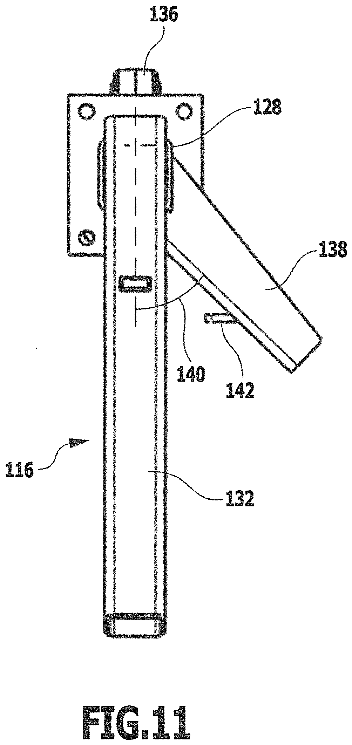

Beispielsweise ist das Führungselement 138 durch einen Stab gebildet, welcher an dem Stützelement 128 beziehungsweise 128' angeordnet ist. Das Führungselement 138 ist in einem spitzen Winkel 140 zu dem Stützelement 128 beziehungsweise 128' angeordnet (vgl. Figur 11). Der spitze Winkel 140 liegt insbesondere im Bereich zwischen 30° und 60° und liegt beispielsweise bei 45°.

Bei einem Ausführungsbeispiel ist das entsprechende Führungselement 138 in einem spitzen Winkel zu einer Ebene angeordnet, welche die Längsachse 130 enthält. Das Führungselement 138 ist beispielsweise parallel zu einer Ebene angeordnet, welche senkrecht zu der Längsachse 130 liegt.

Das Führungselement 138 ist dabei so nach außen weisend angeordnet, dass es mit dem Halter 32 im Bereich der Stummel 56 kooperieren kann (vgl. Figur 13).

Durch die Führungselemente 138 der ersten hinteren Stütze 116 und der zweiten hinteren Stütze 118, welche, wenn diese an dem Rahmen 60 montiert sind, spiegelsymmetrisch zueinander ausgerichtet sind, ist eine Führungseinrichtung gebildet, wobei sich ein Abstand an der Führungseinrichtung in der Querrichtung 64 sich in der Längsrichtung 68 von dem vorderen Ende 72 zu dem hinteren Ende 74 hin verjüngt.

Bei einem Ausführungsbeispiel ist an den Führungselementen 138 jeweils ein Anschlag 142 für den Halter 32 (oder das Fahrzeug 10) angeordnet. Dieser Anschlag ist mindestens näherungsweise parallel zu der Querrichtung 64 orientiert. Er definiert durch Anlage des Halters 32 (beziehungsweise des Fahrzeugs 10) eine geeignete Wechselposition relativ zwischen dem Halter 32 und dem Rahmen 60. Dies wird untenstehend noch weiter erläutert.

Die erste hintere Stütze 116 und die zweite hintere Stütze 118 sind an dem Rahmen 60 in einer Einsetzrichtung 144 einsetzbar und auf diese Art und Weise lösbar fixierbar (vgl. Figur 5).

Die erste vordere Stütze 112 und die zweite vordere Stütze 114 weisen eine Einsetzrichtung 146 auf, mittels welcher diese an dem Rahmen 60 und insbesondere den Laschen 76, 78 fixierbar sind. Die Einsetzrichtung 146 ist dabei insbesondere quer und vorzugsweise senkrecht zu der Einsetzrichtung 144.

Wenn die Stützeinrichtung 110 mit der ersten vorderen Stütze 112, der zweiten vorderen Stütze 114, der ersten hinteren Stütze 116 und der zweiten hinteren Stütze 118 an dem Rahmen 60 fixiert sind, dann ist ein "Vorderportal" 148 (vgl. Figur 13) gebildet, welches durch die erste vordere Stütze 112, die beabstandete zweite vordere Stütze 114 und nach oben durch den Rahmen 60 gebildet ist. Durch dieses Vorderportal 148 hindurch kann der Hinterwagen 14 des Fahrzeugs 10 mit dem Halter 32 in Richtung der hinteren Stützen 116, 118 gefahren werden, bis ein mechanischer Kontakt an den Anschlägen 142 der ersten hinteren Stütze 116 und der zweiten hinteren Stütze 118 erfolgt.

Die erste vordere Stütze 112 und die zweite vordere Stütze 114 weisen eine Länge L₁ in der Längsachse 122 auf, welche einen Abstand des Rahmens 60 an dem vorderen Ende 72 zu dem Untergrund 42 definiert. Entsprechend weisen die hinteren Stützen 116, 118 eine Länge L₂ auf, welche den Abstand des Rahmens 60 an dem hinteren Ende 74 zu dem Untergrund 42 definiert. Üblicherweise haben dabei die erste vordere Stütze 112 und die zweite vordere Stütze 114 die gleiche Länge L₁. Die erste hintere Stütze 116 und die zweite hintere Stütze 118 haben die gleiche Länge L₂. Die Längen L₁ und L₂ sind dabei so eingestellt, dass die Länge L₁ größer ist als die Länge L₂ (vgl. Figur 13).

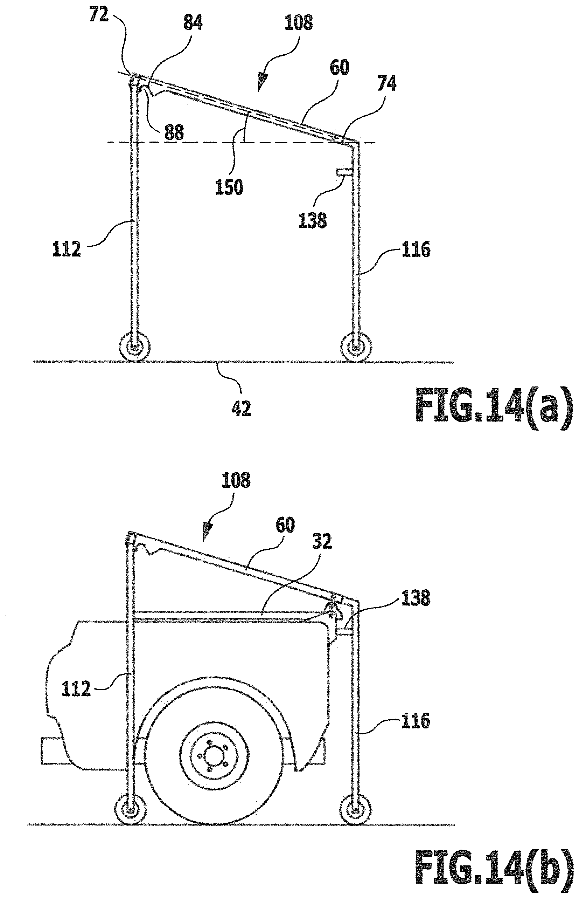

Wenn die Wechselvorrichtung mit dem Rahmen 60 und der Stützeinrichtung 110 auf einem ebenen Untergrund 42 aufsteht, dann liegt dadurch der Rahmen 60 in einem spitzen Winkel 150 zu dem Untergrund 42 (vgl. die Figuren 13 und 14(a)). Das hintere Ende 74 des Rahmens 60 weist einen kleineren Abstand zu dem Untergrund 42 auf als das vordere Ende 72.

In einer Grundstellung der Wechselvorrichtung 108 zur Montage eines Aufbaus 26 an dem Fahrzeug 10 ist der Rahmen 60 in dem spitzen Winkel 150 zu dem Untergrund 42 orientiert. Wenn das Fahrzeug 10 mit dem Halter 32 in einer nicht gekippten Stellung zu dem Rahmen 60 ausgerichtet ist, dann ist auch der Aufnahmebereich 24 des Fahrzeugs 10 zu dem Rahmen 60 in diesem spitzen Winkel 150 ausgerichtet.

Wenn eine Demontage eines Aufbaus 26 von dem Fahrzeug 10 erfolgt ist und der Aufbau an der Wechselvorrichtung 108 angeordnet ist, dann ist ebenfalls der Rahmen 60 in dem spitzen Winkel 150 zu dem Untergrund 42 ausgerichtet.

Der spitze Winkel 150 liegt insbesondere im Bereich zwischen 10° und 50° und vorzugsweise im Bereich zwischen 10° und 30°. Beispielsweise liegt der spitze Winkel 150 bei circa 20°.

Der Winkel 134 zwischen dem Eintauchbereich 132 und dem entsprechenden Stützelement 128, 128' entspricht dem Winkel 150 plus 90°.

Die Montage eines Aufbaus 26 an dem Fahrzeug 10 funktioniert wie folgt (Figuren 13, 14(a) bis 14(h)).

Die Wechselvorrichtung 108 ist "vollständig aufgebaut"; die Stützeinrichtung 110 ist an dem Rahmen 60 fixiert. Der Rahmen 60 ist über die erste vordere Stütze 112, die zweite vordere Stütze 114, die erste hintere Stütze 116 und die zweite hintere Stütze 118 an dem Untergrund 42 abgestützt (Figur 14(a)).

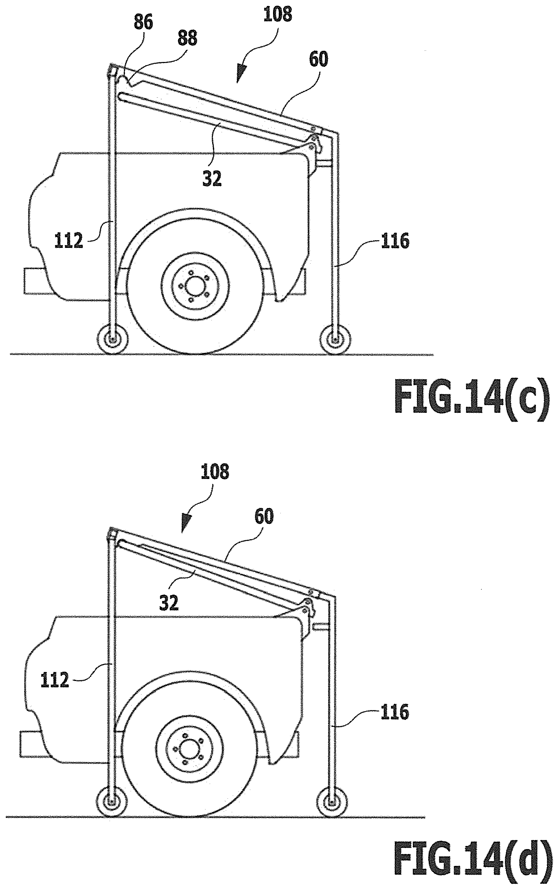

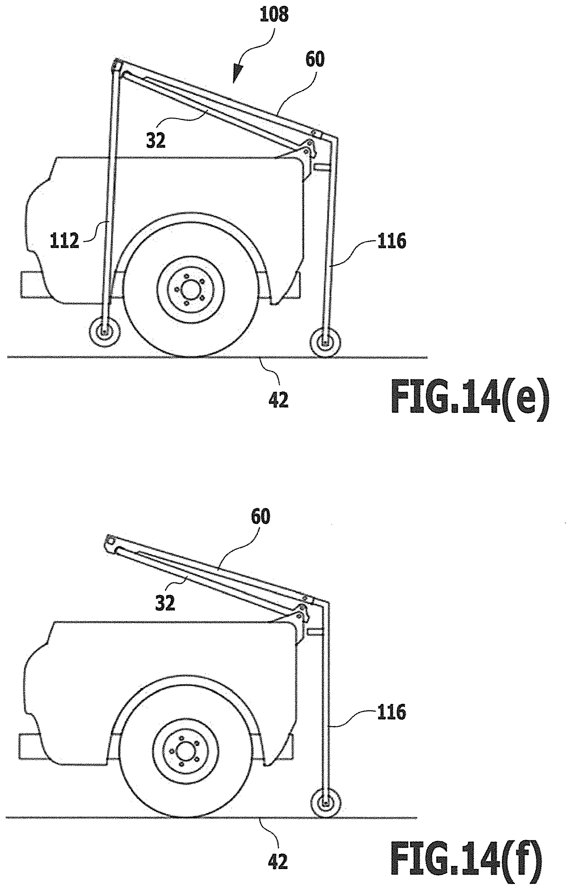

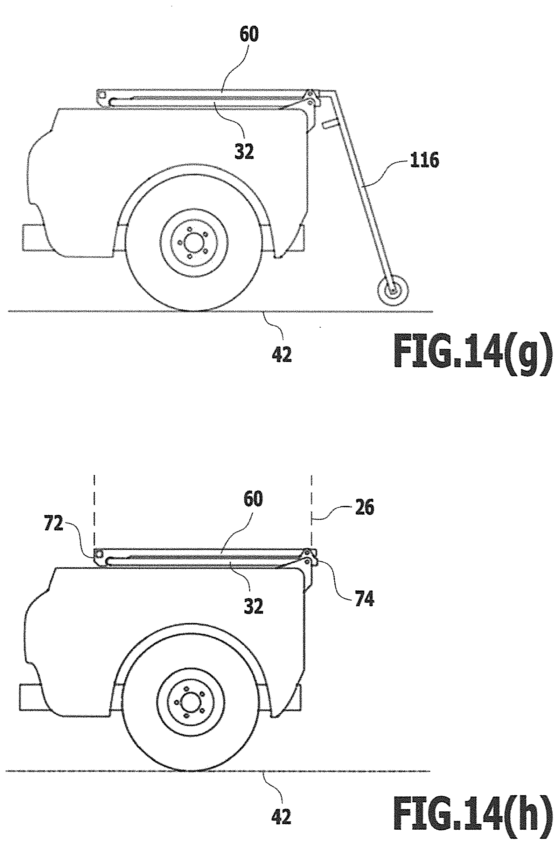

Der Aufbau 26 ist dabei an dem Rahmen 60 fixiert. (In den Figuren 13, 14 ist dies aus darstellerischen Gründen nicht gezeigt.)

Der Halter 32 des Fahrzeugs 10 wird unter den Rahmen 60 gebracht (Figur 14(b); Figur 13). Dies kann dadurch erfolgen, dass das Fahrzeug mit dem Hinterwagen 14 durch das Vorderportal 148 unter den Rahmen 60 mit dem Aufbau 26 gefahren wird. Alternativ ist es dabei möglich, dass die Wechselvorrichtung 108 über den Hinterwagen 14 des Fahrzeugs 10 gefahren wird.

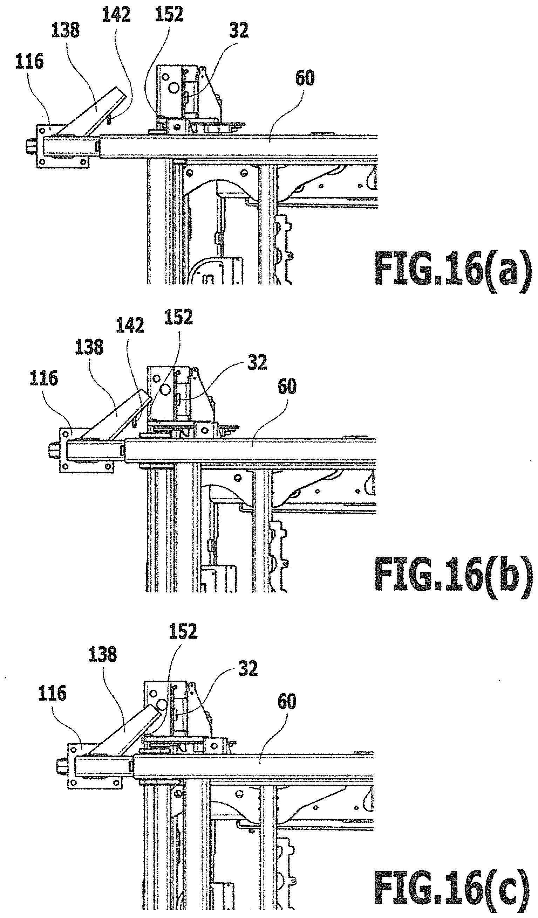

Das Fahrzeug 10 wird dabei relativ zu der Wechselvorrichtung 108 so weit gefahren, wie es dieses beziehungsweise der Halter 32 an dem Anschlag 142 anlegt. Ab einer gewissen Fahrzeugposition relativ zu der Wechselvorrichtung 108 schlägt das Fahrzeug 10 oder der Halter 32 an den Führungselementen 138 an (vgl. Figur 14(b) sowie die Figuren 16(a) bis 16(c)). Der Halter 32 beziehungsweise das Fahrzeug weist dabei einen oder mehrere Anlagebereiche 152 (vgl. die Figuren 16(a) bis (c)) auf, welche an den Führungselementen 138 entlanggleiten können.

Durch die Führungseinrichtung mit den Führungselementen 138 und die trichterförmige Ausbildung in Kombination mit den lenkbaren Rollen 126 und den nichtlenkbaren Rollen 136 kann ein möglicher seitlicher Versatz zwischen dem Rahmen 60 und dem Fahrzeug 10 mit dem Halter 32 ausgeglichen werden. Die Wechselvorrichtung 108 wird gewissermaßen "automatisch" in einer Richtung parallel zur Querrichtung 64 korrekt zu dem Fahrzeug 10 und damit zu dem Halter 32 positioniert. Die Endposition ist erreicht, wenn Anlagebereiche 152 an den Anschlägen 142 anliegen. Diese Position ist in Figur 14(b) angedeutet. Wenn diese Position erreicht ist, dann ist der Halter 32 noch in seiner nicht verkippten Stellung, das heißt in seiner Ausgangsstellung.

Ausgehend von dieser Position wird dann (Figur 14(c)) der Halter 32 angehoben, das heißt es folgt eine Verkippung nach oben. Durch diese Verkippung, welche eine Vergrößerung des Winkels 36 ist, bewegt sich der Halter 32 auf den Rahmen 60 zu, bis er den Rahmen 60 berührt.

Die Wechselvorrichtung 108 ist dabei in Relation zu dem Fahrzeug 10 mit dem Halter 32 so ausgestaltet, dass insbesondere im Bereich des hinteren Endes 74 des Rahmens 60 diese Kippbewegung des Halters 32 nicht behindert wird.

Die Verkippung des Halters 32 relativ zu dem Rahmen 60 erfolgt so weit, bis der Querstab 50 in die entsprechenden Einführungsausnehmungen 88 der Einfangeinrichtung 84 einfährt (Figur 14(d)). Dadurch ist eine Kopplung des Halters 32 an den Rahmen 60 bewirkt.

Der Halter 32 wird dann weiter nach oben verkippt (Figur 14(e)). Durch die Kopplung des Halters 32 an den Rahmen 60 wird der Rahmen 60 und damit die Wechselvorrichtung 108 mitverkippt. Da die erste hintere Stütze 116 und die zweite hintere Stütze 118 eine kleinere Länge L₂ aufweisen als die erste vordere Stütze 112 und die zweite vordere Stütze 114, kann sich bei der Weiterverkippung die Wechselvorrichtung 108 mittels der ersten hinteren Stütze 116 und der zweiten hinteren Stütze 118 an dem Untergrund 42 abstützen, wobei die erste vordere Stütze 112 und die zweite vordere Stütze 114 von dem Untergrund 42 abgehoben werden.

Die erste vordere Stütze 112 und die zweite vordere Stütze 114 werden dadurch frei und können entnommen werden, indem sie von den Laschen 76, 78 gelöst werden (Figur 14(f)). In dieser Stellung ist die Wechselvorrichtung 108 noch über die erste hintere Stütze 116 und die zweite hintere Stütze 118 an dem Untergrund 42 abgestützt.

Anschließend wird der Halter 32 mit angekoppeltem Rahmen 60 zurückgekippt zu dem Aufnahmebereich 24, das heißt der Winkel 36 wird verkleinert (Figur 14(g)). Durch die Ausbildung der Einführungsausnehmung 88 wird bei dem Zurückkippen des Halters 32 der Rahmen 60 in Richtung des Aufnahmebereichs 24 mitgenommen.

Die erste hintere Stütze 116 und die zweite hintere Stütze 118 sind dabei in ihren Längen L₂ bezüglich des Fahrzeugs 10 so dimensioniert, dass, wenn die entsprechende Endstellung erreicht wird und der Halter 32 an dem Aufnahmebereich 24 liegt, diese beabstandet zu dem Untergrund 42 sind. Die erste hintere Stütze 116 und die zweite hintere Stütze 118 können dann von dem Rahmen 60 gelöst werden und entnommen werden. In dieser Stellung sind sie bezüglich des Untergrunds 42 beabstandet, das heißt frei.

In der Endstellung gemäß Figur 14(h) ist dann der Rahmen 60 mit dem Aufbau 26 über den Halter 32 an dem Fahrzeug 10 gehalten. Die Stützeinrichtung 110 ist nicht mehr an dem Rahmen 60 fixiert.

In dieser Stellung erfolgt insbesondere noch eine Fixierung des Rahmens 60 mit dem Halter 32 im Bereich des hinteren Endes 74 des Rahmens 60. Im Bereich des vorderen Endes 72 ist der Rahmen 60 an den Halter 32 über die Querstrebe 50 in der Einfangeinrichtung 84 gekoppelt.

Der Aufbau 26 ist dann an dem Fahrzeug 10 montiert und dabei fest fixiert.

Insbesondere erfolgt die Kippung des Halters 32 an dem Hinterwagen 14 des Fahrzeugs 10 über eine entsprechende hydraulische Einrichtung. Es sind aber auch andere Einrichtungen wie beispielsweise eine elektromotorische Einrichtung oder eine pneumatische Einrichtung möglich.

Zur Demontage eines Aufbaus 26 von dem Fahrzeug 10 wird wie folgt vorgegangen.

Die Fixierung zwischen dem Rahmen 60 und dem Halter 32 im Bereich des hinteren Endes 74 des Rahmens 60 wird gelöst.

Ausgehend von einer Stellung, bei welcher der Halter 32 in seiner Ausgangsstellung (nicht gekippten Stellung) ist und der Rahmen 60 entsprechend an den Halter 32 gekoppelt ist, werden die erste hintere Stütze 116 und die zweite hintere Stütze 118 an dem Rahmen 60 im Bereich dessen hinteren Endes 74 fixiert. Die Fixierung ist dabei auf einfache Weise möglich, da die erste hintere Stütze 116 und die zweite hintere Stütze 118 bezüglich des Untergrunds 42 frei sind, das heißt beabstandet zu dem Untergrund 42 an dem Rahmen 60 fixierbar sind.

Anschließend wird der Halter 32 mit dem Rahmen 60 nach oben gekippt. Durch die entsprechende Ankopplung des Halters 32 an den Rahmen 60 über die Querstrebe 50 wird auch der Rahmen 60 mitgekippt. Dies führt zu einer Bewegung der ersten hinteren Stütze 116 und der zweiten hinteren Stütze 118, bis diese auf dem Untergrund 42 aufstehen und eine entsprechende Abstützung bewirken.

Der Halter 32 wird so weit gekippt, dass die erste vordere Stütze 112 und die zweite vordere Stütze 114 an dem Rahmen 60 frei fixierbar sind, das heißt beabstandet zu dem Untergrund 42 fixierbar sind. Nach der Fixierung stützen sich die erste vordere Stütze 112 und die zweite vordere Stütze 114 nicht an dem Untergrund 42 ab.

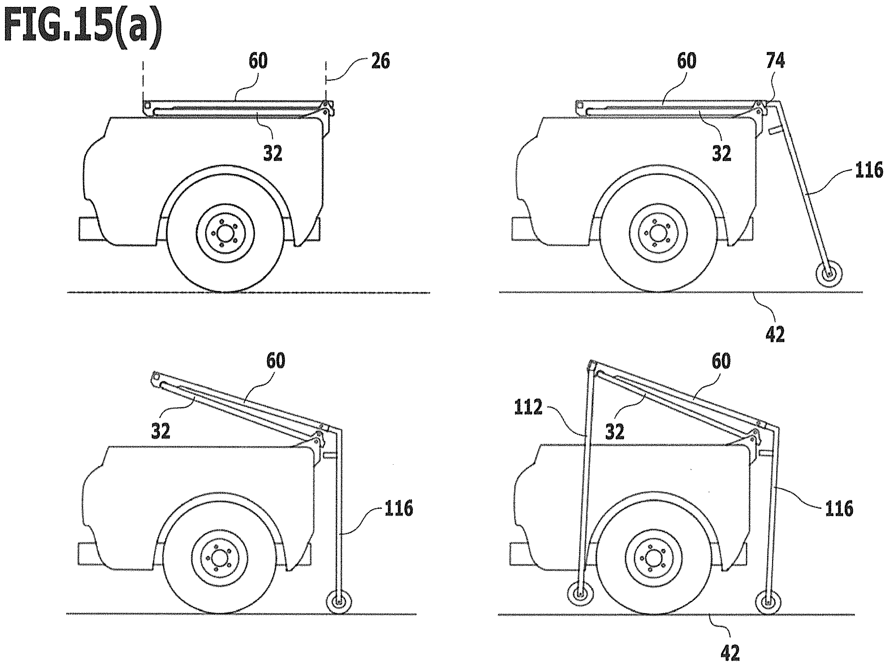

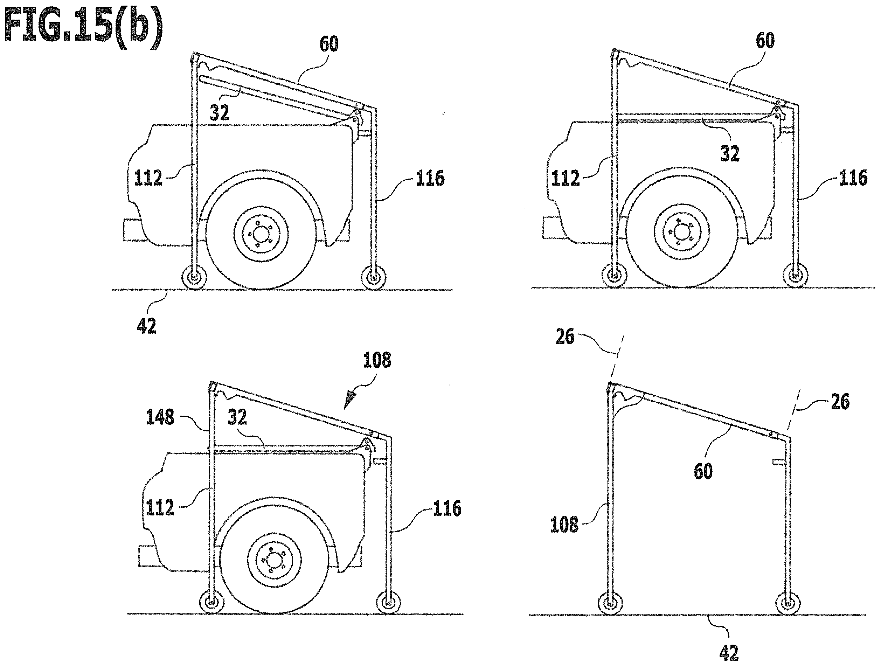

Es wird dann weiterhin (Figur 15(b)) der Halter 32 wieder abgesenkt. Zunächst wird der Rahmen 60 mitgenommen. Durch die entsprechende Ausbildung der Einführungsausnehmung 88 fährt dann die Querstrebe 50 aus der Einführungsausnehmung 88 aus und der Halter 32 und der Rahmen 60 sind entkoppelt. Die erste vordere Stütze 112 und die zweite vordere Stütze 114 stützen sich an dem Untergrund 42 ab. Es ist dann die Wechselvorrichtung 108 mit der Stützeinrichtung 110 gebildet, wobei sich der Rahmen 60 über die erste vordere Stütze 112, die zweite vordere Stütze 114, die erste hintere Stütze 116 und die zweite hintere Stütze 118 an dem Untergrund 42 abstützt.

Der Halter 32 wird weiter in seine Ausgangsstellung zu dem Aufnahmebereich 24 hin gekippt.

Das Fahrzeug 10 kann dann über das Vorderportal 148 ausgefahren werden beziehungsweise die Wechselvorrichtung 108 wird von dem Fahrzeug weggefahren.

Anschließend ist die Wechselvorrichtung 108 mit dem Rahmen 60 auf dem Untergrund 42 abgestützt, wobei der Aufbau 26 an dem Rahmen 60 der Wechselvorrichtung 108 sitzt. Der Aufbau 26 ist vollständig von dem Fahrzeug 10 demontiert.

Durch die Wechselvorrichtung lässt sich auf einfache Weise ein Aufbau 26 an einem Fahrzeug 10 mit kippbarem Halter 32 montieren beziehungsweise demontieren. Die Wechselvorrichtung 108 lässt sich mit geringem konstruktivem Aufwand realisieren. Eine Montage beziehungsweise eine Demontage, das heißt ein Wechseln lässt sich schnell und einfach durchführen. Ein solcher Wechselvorgang ist durch eine einzige Person ohne besondere körperliche Anstrengungen durchführbar.

Die an dem Fahrzeug 10 sowieso vorhandene Einrichtung zum Kippen des Halters 32 (beispielsweise hydraulisch oder elektromotorisch) wird genutzt, so dass beispielsweise eine händische Höhenverstellung der Stützeinrichtung 100 während eines Wechselvorgangs nicht mehr notwendig ist.

Durch die Ausbildung der Wechselvorrichtung 108 insbesondere mit den Führungselementen 138 und den lenkbaren Rollen 126 lässt sich eine Relativbewegung zwischen dem Rahmen 60 und dem Halter 32 erreichen, die eine für einen Wechselvorgang optimierte Ausrichtung mit minimiertem Benutzereingriff ermöglicht.

Die Führungseinrichtung 98 dient zur Führung des Halters 32 bei der Ankopplung an den Rahmen 60. Die Führungselemente 106 dienen ebenfalls zu einer entsprechenden Führung. Ferner sorgt in dem angekoppelten Zustand die Führungseinrichtung 98 und sorgen die Führungselemente 106 für eine Formschlussverbindung in der Querrichtung 64.

Weiterhin sorgt in dem angekoppelten Zustand die Einfangeinrichtung 84 für eine Formschlussverbindung in der Längsrichtung 68.

Durch die Fixierung des Rahmens 60 an dem Halter 32 an der Einrichtung 94 und Gegeneinrichtung 96 wird eine endgültige Fixierung ermöglicht, wobei diese Fixierung grundsätzlich auch ein Kippen des Halters 32 mit daran fixiertem Aufbau 26 ermöglicht.

### Bezugszeichenliste

- 10: Fahrzeug
- 12: Vorderwagen
- 14: Hinterwagen
- 16: Vorderradeinrichtung
- 18: Hinterradeinrichtung
- 20: Fahrerkabine
- 22: Knicklenkeinrichtung
- 24: Aufnahmebereich
- 26: Aufbau
- 28: Vorwärtsfahrtrichtung
- 30: Hinteres Ende
- 32: Halter
- 34: Achse
- 36: Winkel
- 37a: Schwenklager
- 37b: Teilbereich
- 38: Vorderes Ende
- 40: Hinteres Ende
- 42: Untergrund
- 44a: Rahmenleiste
- 44b: Rahmenleiste
- 46: Querstrebe
- 48: Querstrebe
- 50: Querstrebe
- 52a: Außenseite
- 52b: Außenseite
- 54a: Innenseite
- 54b: Innenseite
- 56: Stummel
- 58: Gegenstruktur
- 60: Rahmen
- 62a: Rahmenleiste
- 62b: Rahmenleiste
- 64: Querrichtung
- 66a: Querstrebe
- 66b: Querstrebe
- 68: Längsrichtung
- 70: Lasche
- 72: Vorderes Ende
- 74: Hinteres Ende
- 76: Lasche
- 78: Lasche
- 80: Leistenstummel
- 82: Anlagefläche
- 84: Einfangeinrichtung
- 86: Hakenelement
- 88: Einführungsausnehmung
- 90: Richtung
- 92: Abstützfläche
- 94: Einrichtung
- 96: Gegeneinrichtung
- 98: Führungseinrichtung
- 100: Ausnehmung
- 102: Bereich
- 104: Mündung
- 106: Führungselement
- 108: Wechselvorrichtung
- 110: Stützeinrichtung
- 112: Erste vordere Stütze
- 114: Zweite vordere Stütze
- 116: Erste hintere Stütze
- 118: Zweite hintere Stütze
- 120: Stützelement
- 122: Längsachse
- 124: Stab
- 126: Rolle
- 128: Stützelement
- 128': Stützelement
- 130: Längsachse
- 132: Eintauchbereich
- 133: Aufnahme
- 134: Winkel
- 136: Rolle
- 138: Führungselement
- 140: Spitzer Winkel
- 142: Anschlag
- 144: Einsetzrichtung
- 146: Einsetzrichtung
- 148: Vorderportal
- 150: Winkel
- 152: Anlagebereich

## Patentansprüche

1. Wechselvorrichtung für einen Aufbau (26) eines Fahrzeugs (10), wobei das Fahrzeug (10) einen kippbaren Halter (32) für den Aufbau (26) aufweist und die Wechselvorrichtung umfasst:
- einen Rahmen (60), an welchem der Aufbau (26) fixiert oder fixierbar ist und über welchen der Aufbau (26) an dem Halter (32) montierbar ist, wobei sich der Rahmen (60) in einer Längsrichtung (68) zwischen einem vorderen Ende (72) und einem hinteren Ende (74) erstreckt;
- eine Stützeinrichtung (100), welche an dem Rahmen (60) lösbar fixierbar ist und über welche der Rahmen (60) beabstandet zu einem Untergrund (42), auf dem das Fahrzeug (10) aufsteht, abstützbar ist, wobei die Stützeinrichtung (100) mindestens eine erste vordere Stütze (112) und eine zweite vordere Stütze (114), und mindestens eine hintere Stütze (116; 118) umfasst, wobei die erste vordere Stütze (112) und die zweite vordere Stütze (114) zur Fixierung an dem Rahmen (60) in einem Bereich des vorderen Endes (72) des Rahmens (60) vorgesehen sind und die mindestens eine hintere Stütze (116; 118) zur Fixierung an dem Rahmen (60) in einem Bereich des hinteren Endes (74) des Rahmens (60) vorgesehen ist, wobei in der fixierten Stellung die erste vordere Stütze (112) und die zweite vordere Stütze (114) in einer Querrichtung (64) zu der Längsrichtung (68) des Rahmens (60) beabstandet sind und der Halter (32) zwischen der ersten Stütze (112) und der zweiten Stütze (114) hindurch in Richtung der mindestens einen hinteren Stütze (116; 118) bringbar ist, und wobei die mindestens eine hintere Stütze (116; 118) in der Längsrichtung (68) beabstandet zu der ersten vorderen Stütze (112) und der zweiten vorderen Stütze (114) ist,
wobei die erste Stütze (112) und die zweite Stütze (114) jeweils in einer Längsachse (122) eine größere Länge aufweist als die mindestens eine hintere Stütze (116; 118), wobei die Länge in der Längsachse (122; 130) einen Höhenabstand des Rahmens (60) zu dem Untergrund (42) definiert, und wobei bei an dem Rahmen (60) fixierter Stützeinrichtung (100) und Abstützung an einem ebenen Untergrund (42) der Rahmen (60) in einem spitzen Winkel (150) zu dem Untergrund (42) orientiert ist.

2. Wechselvorrichtung nach Anspruch 1, **dadurch gekennzeichnet, dass** der spitze Winkel (150) in einem Bereich zwischen 10° und 50° zu dem Untergrund (42) und insbesondere in einem Bereich zwischen 10° und 30° liegt.

3. Wechselvorrichtung nach Anspruch 1 oder 2, **dadurch gekennzeichnet, dass** die Stützeinrichtung (100) eine erste hintere Stütze (116) und eine zweite hintere Stütze (118) umfasst, welche in der Querrichtung (64) beabstandet sind.

4. Wechselvorrichtung nach einem der vorangehenden Ansprüche, **dadurch gekennzeichnet, dass** die Stützen (112, 114, 116, 118) der Stützeinrichtung (100) auf dem Untergrund (42) fahrbar ausgebildet sind, und insbesondere, dass Stützen (112, 114, 116, 118) eine Rolle (126; 136) oder ein Rad aufweisen, und insbesondere, dass die erste vordere Stütze (112) und/oder die zweite vordere Stütze (114) ein lenkbares Fahrelement (126) umfassen, und insbesondere, dass die mindestens eine hintere Stütze (116; 118) ein nichtlenkbares Fahrelement (136) umfasst.

5. Wechselvorrichtung nach einem der vorangehenden Ansprüche, **dadurch gekennzeichnet, dass** eine Länge einer Stütze (112; 114; 116; 118) in der Längsachse (122; 130) feststellbar einstellbar ist und insbesondere dass die Länge der ersten vorderen Stütze (112) und der zweiten vorderen Stütze (114) gleich ist oder gleich eingestellt ist.

6. Wechselvorrichtung nach einem der vorangehenden Ansprüche, **dadurch gekennzeichnet, dass** der Rahmen (60) eine Einfangeinrichtung (84) und der Halter (32) ein Gegenelement (50) für die Einfangeinrichtung (84) aufweist, wobei bei eingefangenem Gegenelement (50) der Halter (32) und der Rahmen (60) miteinander gekoppelt sind und durch Kippen des Halters (32) der Rahmen (60) mitgekippt wird, insbesondere wenn sich die mindestens eine hintere Stütze (116; 118) am Untergrund (42) abstützt, und insbesondere, dass die Einfangeinrichtung (84) im Bereich des vorderen Endes (72) des Rahmens (60) angeordnet ist, und insbesondere, dass die Einfangeinrichtung (84) mindestens ein Hakenelement (86) für das Gegenelement (50) aufweist, und insbesondere, dass das mindestens eine Hakenelement (86) eine Einführungsausnehmung (88) aufweist, welche quer zu der Querrichtung (64) und quer zu der Längsrichtung (68) des Rahmens (60) offen ist, und insbesondere, dass das Gegenelement (50) ein Rundstab ist oder umfasst, und insbesondere, dass an dem Rahmen (60) mindestens eine Lasche (76; 78) mit der Einfangeinrichtung (84) angeordnet ist, und insbesondere, dass an der mindestens einen Lasche (76; 78) die erste vordere Stütze (112) und/oder die zweite vordere Stütze (114) lösbar fixierbar ist, und insbesondere, dass die mindestens eine Lasche (76; 78) eine Abstützfläche (92) für die erste vordere Stütze (112) und/oder die zweite vordere Stütze (114) aufweist, und insbesondere, dass an der mindestens einen Lasche (76; 78) eine Führungseinrichtung (98) für den Halter (32) angeordnet ist.

7. Wechselvorrichtung nach einem der vorangehenden Ansprüche, **dadurch gekennzeichnet, dass** der Rahmen (60) eine Aufnahme (133) aufweist, in welche die mindestens eine hintere Stütze (116; 118) mit einem Eintauchbereich (132) einsteckbar ist, und insbesondere, dass eine Einsetzrichtung (144) mindestens näherungsweise parallel zu der Längsrichtung (68) des Rahmens (60) ist, und insbesondere, dass der Eintauchbereich (132) der mindestens einen hinteren Stütze (116; 118) in einem Winkel (134) zu einer Längsachse (130) der mindestens einen hinteren Stütze (116; 118) orientiert ist, wobei der Winkel (134) insbesondere im Bereich zwischen 100° und 140° liegt, und insbesondere, dass eine Einsetzrichtung (146) der ersten vorderen Stütze (112) und/oder der zweiten vorderen Stütze (114) quer zu der Einsetzrichtung (144) der mindestens einen hinteren Stütze (116; 118) liegt.

8. Wechselvorrichtung nach einem der vorangehenden Ansprüche, **dadurch gekennzeichnet, dass** an dem Rahmen (60) beabstandete Führungselemente (106) für den Halter (32) angeordnet sind und/oder dass an dem Halter (32) beabstandete Führungselemente für den Rahmen (60) angeordnet sind, und insbesondere, dass Führungselemente (106) über den Rahmen (60) in Richtung des Halters (32) hinausragen und/oder über den Halter (32) in Richtung des Rahmens (60) hinausragen.

9. Wechselvorrichtung nach einem der vorangehenden Ansprüche, **gekennzeichnet durch** eine Fixierungseinrichtung, über welche der Rahmen (60) und/oder der Aufbau (26) mit dem Halter (32) in einem Bereich des hinteren Endes (74) des Rahmens (60) fixierbar ist.

10. Wechselvorrichtung nach einem der vorangehenden Ansprüche, **dadurch gekennzeichnet, dass** an der mindestens einen hinteren Stütze (116; 118) und/oder dem Rahmen (60) ein Führungselement (138) für den Halter (32) und/oder das Fahrzeug (10) angeordnet ist, und insbesondere, dass das Führungselement (138) in einem spitzen Winkel (140) zu einer Längsachse (130) der mindestens einen hinteren Stütze (116; 118) angeordnet ist, und insbesondere, dass das mindestens eine Führungselement (138) von dem Rahmen (60) weg nach außen weist, wenn die entsprechende Stütze (116; 118) an dem Rahmen (60) fixiert ist, und insbesondere, dass das Führungselement (138) in einem spitzen Winkel (140) zu einer Ebene angeordnet ist, welche eine Längsachse (130) der mindestens einen hinteren Stütze (116; 118) enthält, und/oder in einem spitzen Winkel zu einer Ebene angeordnet ist, welche quer zu der Längsachse orientiert ist, und insbesondere, dass an dem Führungselement (138) ein Anschlag (142) für den Halter (32) und/oder das Fahrzeug (10) angeordnet ist, welcher insbesondere mindestens näherungsweise parallel zu der Querrichtung (64) des Rahmens (60) orientiert ist.

11. Wechselvorrichtung nach Anspruch 10, **gekennzeichnet durch** mindestens eine erste hintere Stütze (116) und eine zweite hintere Stütze (118), welche jeweils ein Führungselement (138) aufweisen, wobei bei an dem Rahmen (60) angeordneter ersten hinteren Stütze (116) und zweiten hinteren Stütze (118) eine durch die Führungselemente (138) definierte Führungseinrichtung sich verjüngt, wobei bei auf ebenen Untergrund (42) aufgesetzter Stützeinrichtung (100) die Verjüngung in einer Richtung parallel zum Untergrund (42) orientiert ist und/oder senkrecht zum Untergrund (42) orientiert ist.

12. Wechselvorrichtung nach Anspruch 10 oder 11, **dadurch gekennzeichnet, dass** an dem Halter (32) und/oder dem Fahrzeug (10) ein oder mehrere Anlagebereiche (152) zur Kooperation mit dem Führungselement (138) angeordnet sind, wobei insbesondere das Führungselement (138) an einem Anlagebereich (152) gleitbar ist.

13. Kombination aus einem Fahrzeug (10) mit einem kippbaren Halter (32), mindestens einem Aufbau (26) und einer Wechselvorrichtung (108) gemäß einem der vorangehenden Ansprüche, und insbesondere **dadurch gekennzeichnet, dass** der Halter (32) eine Kippachse (34) aufweist, welche im Bereich eines hinteren Endes (30) des Fahrzeugs (10), bezogen auf eine Vorwärtsfahrtrichtung (28), angeordnet ist.

14. Verfahren zum Wechseln eines Aufbaus (26) bei einem Fahrzeug (10) mit einem kippbaren Halter (32) für den Aufbau (26) unter Verwendung einer Wechselvorrichtung (108) gemäß einem der Ansprüche 1 bis 13,
wobei das Verfahren für die Montage eines Aufbaus (26) an dem Halter (32) umfasst:
- Bringen des Rahmens (60) mit fixiertem Aufbau (26) und mit fixierter Stützeinrichtung (100) über den Halter (32), wobei sich die Stützeinrichtung (100) am Untergrund (42) abstützt;
- Kippen des Halters (32) durch Anheben in Richtung des Rahmens (60) und Ankopplung des Halters (32) an den Rahmen (60);
- weiteres Kippen des Halters (32) unter Mitnahme des Rahmens (60) bei an dem Untergrund (42) abgestützter mindestens einer hinteren Stütze (116; 118) des Rahmens (60) durch Anheben bis die erste vordere Stütze (112) und die zweite vordere Stütze (114) vom Untergrund (42) abgehoben sind;
- Entfernen der ersten vorderen Stütze (112) und der zweiten vorderen Stütze (114) von dem Rahmen (60);
- Zurückkippen des Halters (32) mit dem Rahmen (60), wobei die mindestens eine hintere Stütze (116; 118) von dem Untergrund (42) abgehoben wird; und
- Entfernung der mindestens einen hinteren Stütze (116; 118);
und/oder wobei das Verfahren zur Demontage eines Aufbaus (26), welcher über den Rahmen (60) an dem Halter (32) fixiert ist, umfasst:
- Fixierung der mindestens einen hinteren Stütze (116; 118) an dem Rahmen (60), wobei die mindestens eine hintere Stütze (116; 118) von dem Untergrund (42) beabstandet ist;
- Kippen des Halters (32) mit angekoppeltem Rahmen (60) durch Anheben bis sich die mindestens eine hintere Stütze (116; 118) an dem Untergrund (42) abstützt und die erste vordere Stütze (112) und die zweite vordere Stütze (114) beabstandet zu dem Untergrund (42) an dem Rahmen (60) fixierbar sind;
- Fixierung der ersten vorderen Stütze (112) und der zweiten vorderen Stütze (114) an dem Rahmen (60);
- Absenkung des Halters (32) mit angekoppeltem Rahmen (60) durch Kippen bis die erste vordere Stütze (112) und die zweite vordere Stütze (114) sich auf dem Untergrund abstützen;
- Entkopplung des Halters (32) von dem Rahmen (60) und weiteres Absenken des Halters (32) ohne Rahmen (60) durch Kippen; und
- Wegbringen des Rahmens (60) mit der Stützeinrichtung (100) und dem Aufbau (26) von dem Halter (32).

15. Verfahren nach Anspruch 14, **dadurch gekennzeichnet, dass** bei der Montage des Aufbaus (26) der Aufbau (26) mit dem Halter (32) in einem Bereich des hinteren Endes (74) des Rahmens (60) fixiert wird, wobei der Rahmen (60) an den Halter (32) in einem Bereich des vorderen Endes (72) des Rahmens (60) gekoppelt ist und/oder dass zum Abnehmen des Aufbaus (26) eine Fixierung des Rahmens (60) am Halter (32) im Bereich des hinteren Endes (74) des Rahmens (60) gelöst wird,
und/oder, dass zum Bringen des Rahmens (60) mit fixierter Stützeinrichtung (100) über den Halter (32) das Fahrzeug (10) unter den Rahmen (60) gefahren wird und/oder der Rahmen (60) mit der Stützeinrichtung (100) über den Halter (32) gefahren wird, und/oder dass zum Wegbringen des Rahmens (60) von dem Halter (32) das Fahrzeug (10) von dem Rahmen (60) weggefahren wird und/oder der Rahmen (60) mit der Stützeinrichtung (100) von dem Fahrzeug (10) weggefahren wird,
und/oder, dass Führungselemente (98; 106; 138) an dem Rahmen (60) und/oder an der Stützeinrichtung (100) für eine Ausrichtung des Halters (32) zu dem Rahmen (60) sorgen, und insbesondere, dass lenkbare Fahrelemente (126) an der ersten vorderen Stütze (112) und/oder der zweiten vorderen Stütze (114) für eine Ausrichtung des Halters (32) zu dem Rahmen (60) sorgen,
und/oder, dass für die Montage des Aufbaus (26) ein hinteres Ende (74) des Halters (32) oder ein hinteres Ende (30) des Fahrzeugs (10) in Kontakt mit der mindestens einen hinteren Stütze (116; 118) gebracht wird.

## Claims

1. Changing apparatus for a superstructure (26) of a vehicle (10), wherein the vehicle (10) comprises a tiltable holder (32) for the superstructure (26), the changing apparatus comprising:
- a frame (60) to which the superstructure (26) is fixed or fixable and via which the superstructure (26) is mountable to the holder (32), wherein the frame (60) extends in a longitudinal direction (68) between a front end (72) and a rear end (74);
- a support device (100) which is releasably fixable to the frame (60) and via which the frame (60) is supportable in spaced relation to a ground surface (42) on which the vehicle (10) stands, wherein the support device (100) comprises at least a first front support (112) and a second front support (114) and at least one rear support (116; 118), wherein the first front support (112) and the second front support (114) are provided for fixing to the frame (60) in an area of the front end (72) of the frame (60), and the at least one rear support (116; 118) is provided for fixing to the frame (60) in an area of the rear end (74) of the frame (60), wherein, when in the fixed position, the first front support (112) and the second front support (114) are spaced apart in a transverse direction (64) relative to the longitudinal direction (68) of the frame (60) and the holder (32) is capable of being brought through between the first support (112) and the second support (114) in a direction of the at least one rear support (116; 118), and wherein the at least one rear support (116; 118) is spaced from the first front support (112) and the second front support (114) in the longitudinal direction (68), wherein the first support (112) and the second support (114) each have a longer length in a longitudinal axis (122) than the at least one rear support (116; 118), wherein the length in the longitudinal axis (122; 130) defines a height distance of the frame (60) from the ground surface (42), and wherein, when the support device (100) is fixed to the frame (60) and supported on a level ground surface (42), the frame (60) is oriented at an acute angle (150) relative to the ground surface (42).

2. Changing apparatus in accordance with claim 1, **characterized in that** the acute angle (150) is in a range between 10° and 50° relative to the ground surface (42) and is in particular in a range between 10° and 30°.

3. Changing apparatus in accordance with claim 1 or 2, **characterized in that** the support device (100) comprises a first rear support (116) and a second rear support (118) which are spaced apart in the transverse direction (64).

4. Changing apparatus in accordance with any one of the preceding claims, **characterized in that** the supports (112, 114, 116, 118) of the supporting device (100) are configured to be capable of travelling on the ground surface (42) and in particular **in that** supports (112, 114, 116, 118) comprise a roller (126; 136) or a wheel, and in particular **in that** the first front support (112) and/or the second front support (114) comprise a steerable travelling element (126), and in particular **in that** the at least one rear support (116; 118) comprises a non-steerable travelling element (136).

5. Changing apparatus in accordance with any one of the preceding claims, **characterized in that** a length of a support (112; 114; 116; 118) is fixably adjustable in the longitudinal axis (122; 130) and in particular **in that** the length of the first front support (112) and the length of the second front support (114) are the same or are adjusted to be the same.

6. Changing apparatus in accordance with any one of the preceding claims, **characterized in that** the frame (60) comprises a capture device (84) and the holder (32) comprises a counter element (50) for the capture device (84), wherein, when the counter element (50) is captured, the holder (32) and the frame (60) are coupled to one another and, by tilting the holder (30), the frame (60) is tilted along therewith, in particular when the at least one rear support (116; 118) is supported on the ground surface (42), and in particular **in that** the capture device (84) is arranged in the area of the front end (72) of the frame (60), and in particular **in that** the capture device (84) comprises at least one hook element (86) for the counter element (50), and in particular **in that** the at least one hook element (86) comprises an insertion recess (88) which is open transversely to the transverse direction (64) and transversely to the longitudinal direction (68) of the frame (60), and in particular **in that** the counter element (50) is or comprises a round bar, and in particular **in that** at least one lug (76; 78) having the capture device (84) is arranged on the frame (60), and in particular **in that** the first front support (112) and/or the second front support (114) are releasably fixable to the at least one lug (76; 78), and in particular **in that** the at least one lug (76; 78) comprises a supporting surface (92) for the first front support (112) and/or the second front support (114), and in particular **in that** a guide device (98) for the holder (32) is arranged on the at least one lug (76; 78).

7. Changing apparatus in accordance with any one of the preceding claims, **characterized in that** the frame (60) comprises a receptacle (133) into which the at least one rear support (116; 118) is insertable at an insertion portion (132) thereof, and in particular **in that** an insertion direction (144) is at least approximately parallel to the longitudinal direction (68) of the frame (60), and in particular **in that** the insertion portion (132) of the at least one rear support (116; 118) is oriented at an angle (134) to a longitudinal axis (130) of the at least one rear support (116; 118), wherein the angle (134) is in particular in the range between 100° and 140°, and in particular **in that** an insertion direction (146) of the first front support (112) and/or the second front support (114) is transverse to the insertion direction (144) of the at least one rear support (116; 118).

8. Changing apparatus in accordance with any one of the preceding claims, **characterized in that** spaced guide elements (106) for the holder (32) are arranged on the frame (60) and/or **in that** spaced guide elements (106) for the frame (60) are arranged on the holder (32), and in particular **in that** guide elements (106) project beyond the frame (60) in a direction of the holder (32) and/or project beyond the holder (32) in a direction of the frame (60).

9. Changing apparatus in accordance with any one of the preceding claims, **characterized by** a fixing device via which the frame (60) and/or the superstructure (26) is fixable in an area of the rear end (74) of the frame (60) using the holder (32).

10. Changing apparatus in accordance with any one of the preceding claims, **characterized in that** a guide element (138) for the holder (32) and/or the vehicle (10) is arranged on the at least one rear support (116; 118) and/or the frame (60), and in particular **in that** the guide element (138) is arranged at an acute angle (140) relative to a longitudinal axis (130) of the at least one rear support (116; 118), and in particular **in that** the at least one guide element (138) points outwards away from the frame (60) when the corresponding support (116; 118) is fixed to the frame (60), and in particular **in that** the guide element (138) is arranged at an acute angle (140) relative to a plane which contains a longitudinal axis (130) of the at least one rear support (116; 118) and/or is arranged at an acute angle relative to a plane which is oriented transversely to the longitudinal axis, and in particular **in that** arranged on the guide element (138) is a stop (142) for the holder (32) and/or the vehicle (10), which stop (142) is oriented in particular at least approximately parallel to the transverse direction (64) of the frame (60).

11. Changing apparatus in accordance with claim 10, **characterized by** at least a first rear support (116) and a second rear support (118) which each comprise a guide element (138), wherein, when the first rear support (116) and the second rear support (118) are arranged on the frame (60), a guide device defined by the guide elements (138) tapers, wherein, when the support device (100) is placed on a level ground surface (42), the taper is oriented in a direction parallel to the ground surface (42) and/or perpendicular to the ground surface (42).

12. Changing apparatus in accordance with claim 10 or 11, **characterized in that** arranged on the holder (32) and/or the vehicle (10) is one or more contact regions (152) for cooperation with the guide element (138), in particular wherein the guide element (138) is slidable on a contact region (152).

13. Combination of a vehicle (10) having a tiltable holder (32), at least one superstructure (26) and a changing apparatus (108) in accordance with any one of the preceding claims, **characterized in that** the holder (32) has a tilting axis (34) which is arranged in the area of a rear end (30) of the vehicle (10) relative to a forward travel direction (28).

14. Method of changing a superstructure (26) in a vehicle (10) having a tiltable holder (32) for the superstructure (26) using a changing apparatus (108) in accordance with any one of claims 1 to 13,
the method for mounting a superstructure (26) to the holder (32) comprising:
- bringing the frame (60) with the superstructure (26) fixed thereto and with the support device (100) fixed thereto over the holder (32), wherein the support device (100) is supported on the ground surface (42);
- tilting the holder (32) by raising the holder (32) in a direction of the frame (60), and coupling the holder (32) to the frame (60);
- further tilting the holder (32) while carrying therewith the frame (60) and with at least one rear support (116; 118) of the frame (60) supported on the ground surface (42), by raising the holder (32) until the first front support (112) and the second front support (114) are lifted clear of the ground surface (42);
- removing the first front support (112) and the second front support (114) from the frame (60);
- tilting back the holder (32) together with the frame (60), wherein the at least one rear support (116; 118) is lifted clear of the ground surface (42); and
- removing the at least one rear support (116; 118);
and/or wherein the method for demounting a superstructure (26) that is fixed to the holder (32) via the frame (60) comprises:
- fixing the at least one rear support (116; 118) to the frame (60), wherein the at least one rear support (116; 118) is in spaced relation to the ground surface (42);
- tilting the holder (32) with the frame (60) coupled thereto by raising the holder (32) until the at least one rear support (116; 118) is supported on the ground surface (42) and the first front support (112) and the second front support (114) are fixable to the frame (60) in spaced relation to the ground surface (42);
- fixing the first front support (112) and the second front support (114) to the frame (60);
- lowering the holder (32) with the frame (60) coupled thereto by tilting the holder (32) until the first front support (112) and the second front support (114) are supported on the ground surface;
- decoupling the holder (32) from the frame (60) and further lowering the holder (32) without the frame (60) by tilting; and
- removing the frame (60) together with the support device (100) and the superstructure (26) from the holder (32).

15. Method in accordance with claim 14, **characterized in that**, when mounting the superstructure (26), the superstructure (26) is fixed in an area of the rear end (74) of the frame (60) using the holder (32), wherein the frame (60) is coupled to the holder (32) in an area of the front end (72) of the frame (60), and/or **in that** for removing the superstructure (26), the fixation of the frame (60) to the holder (32) in the area of the rear end (74) of the frame (60) is released,
and/or **in that** for bringing the frame (60) with the support device (100) fixed thereto over the holder (32), the vehicle (10) is driven under the frame (60) and/or the frame (60) including the support device (100) is driven over the holder (32), and/or **in that** for removing the frame (60) from the holder (32), the vehicle (10) is driven away from the frame (60) and/or the frame (60) including the support device (100) is driven away from the vehicle (10),
and/or **in that** guide elements (98; 106; 138) on the frame (60) and/or on the support device (100) provide for alignment of the holder (32) with the frame (60), and in particular **in that** steerable travelling elements (126) on the first front support (112) and/or on the second front support (114) provide for alignment of the holder (32) with the frame (60),
and/or **in that** for mounting the superstructure (26), a rear end (74) of the holder (32) or a rear end (30) of the vehicle (10) is brought into contact with the at least one rear support (116; 118).

## Revendications

1. Dispositif de remplacement pour une carrosserie (26) d'un véhicule (10), dans lequel le véhicule (10) présente un support (32) basculant pour la carrosserie (26) et le dispositif de remplacement comprend :
- un cadre (60), sur lequel la carrosserie (26) est fixée ou peut être fixée et par l'intermédiaire duquel la carrosserie (26) peut être montée sur le support (32), dans lequel le cadre (60) s'étend dans une direction longitudinale (68) entre une extrémité avant (72) et une extrémité arrière (74) ;
- un dispositif de soutien (100), lequel peut être fixé de manière détachable au cadre (60) et par l'intermédiaire duquel le cadre (60) peut être en appui à distance d'un sol (42) sur lequel le véhicule (10) repose, dans lequel le dispositif de soutien (100) comprend au moins un premier montant avant (112) et un deuxième montant avant (114), et au moins un montant arrière (116 ; 118), dans lequel le premier montant avant (112) et le deuxième montant avant (114) sont destinés à être fixés au cadre (60) dans une zone de l'extrémité avant (72) du cadre (60) et l'au moins un montant arrière (116 ; 118) est destiné à être fixé au cadre (60) dans une zone de l'extrémité arrière (74) du cadre (60), dans lequel, dans la position fixée, le premier montant avant (112) et le deuxième montant avant (114) sont espacés dans une direction transversale (64) par rapport à la direction longitudinale (68) du cadre (60) et le support (32) peut être amené à travers entre le premier montant (112) et le deuxième montant (114), en direction de l'au moins un montant arrière (116 ; 118), et dans lequel l'au moins un montant arrière (116 ; 118) est, dans la direction longitudinale (68), espacé du premier montant avant (112) et du deuxième montant avant (114),
dans lequel le premier montant (112) et le deuxième montant (114) présentent respectivement dans un axe longitudinal (122) une longueur plus grande que l'au moins un montant arrière (116 ; 118), dans lequel la longueur dans l'axe longitudinal (122 ; 130) définit une distance en hauteur du cadre (60) par rapport au sol (42), et en ce que lorsque le dispositif de soutien (100) est fixé au cadre (60) et prend appui sur un sol (42) plat, le cadre (60) est orienté selon un angle aigu (150) par rapport au sol (42).

2. Dispositif de remplacement selon la revendication 1, **caractérisé en ce que** l'angle aigu (150) se situe dans une plage comprise entre 10° et 50° par rapport au sol (42) et en particulier dans une plage comprise entre 10° et 30°.

3. Dispositif de remplacement selon la revendication 1 ou 2, **caractérisé en ce que** le dispositif de soutien (100) comprend un premier montant arrière (116) et un deuxième montant arrière (118), lesquels sont espacés dans la direction transversale (64) .

4. Dispositif de remplacement selon l'une quelconque des revendications précédentes, **caractérisé en ce que** les montants (112, 114, 116, 118) du dispositif de soutien (100) sont réalisés de manière à pouvoir se déplacer sur le sol (42), et en particulier **en ce que** les montants (112, 114, 116, 118) présentent une roulette (126 ; 136) ou une roue, et en particulier **en ce que** le premier montant avant (112) et/ou le deuxième montant avant (114) comprennent un élément de conduite (126) manoeuvrable, et en particulier **en ce que** l'au moins un montant arrière (116 ; 118) comprend un élément de conduite (136) non manoeuvrable.

5. Dispositif de remplacement selon l'une quelconque des revendications précédentes, **caractérisé en ce qu'**une longueur d'un montant (112 ; 114 ; 116 ; 118) dans l'axe longitudinal (122 ; 130) est réglable avec possibilité de blocage et en particulier **en ce que** la longueur du premier montant avant (112) et du deuxième montant avant (114) est identique ou est réglée de manière identique.

6. Dispositif de remplacement selon l'une quelconque des revendications précédentes, **caractérisé en ce que** le cadre (60) présente un dispositif de capture (84) et le support (32) un élément complémentaire (50) pour le dispositif de capture (84), dans lequel, lorsque l'élément complémentaire (50) est capturé, le support (32) et le cadre (60) sont accouplés l'un à l'autre et le basculement du support (32) fait basculer le cadre (60), en particulier lorsque l'au moins un montant arrière (116 ; 118) s'appuie sur le sol (42), et en particulier **en ce que** le dispositif de capture (84) est disposé dans la zone de l'extrémité avant (72) du cadre (60), et en particulier **en ce que** le dispositif de capture (84) présente au moins un élément crochet (86) pour l'élément complémentaire (50), et en particulier **en ce que** l'au moins un élément crochet (86) présente un évidement d'introduction (88), lequel est ouvert transversalement à la direction transversale (64) et transversalement à la direction longitudinale (68) du cadre (60), et en particulier **en ce que** l'élément complémentaire (50) est ou comprend une barre ronde, et en particulier **en ce qu'**au moins une languette (76 ; 78) avec le dispositif de capture (84) est disposée sur le cadre (60), et en particulier **en ce que** le premier montant avant (112) et/ou le deuxième montant avant (114) peuvent être fixés de manière détachable sur l'au moins une languette (76 ; 78), et en particulier **en ce que** l'au moins une languette (76 ; 78) présente une surface d'appui (92) pour le premier montant avant (112) et/ou le deuxième montant avant (114), et en particulier **en ce qu'**un dispositif de guidage (98) pour le support (32) est disposé sur l'au moins une languette (76 ; 78).

7. Dispositif de remplacement selon l'une quelconque des revendications précédentes, **caractérisé en ce que** le cadre (60) présente un logement (133), dans lequel l'au moins un montant arrière (116 ; 118) peut être introduit à l'aide d'une zone d'enfoncement (132), et en particulier, **en ce qu'**une direction d'insertion (144) est au moins approximativement parallèle à la direction longitudinale (68) du cadre (60), et en particulier **en ce que** la zone d'enfoncement (132) de l'au moins un montant arrière (116 ; 118) est orientée selon un angle (134) par rapport à un axe longitudinal (130) de l'au moins un montant arrière (116 ; 118), dans lequel l'angle (134) se situe en particulier dans la plage comprise entre 100° et 140°, et en particulier, **en ce qu'**une direction d'insertion (146) du premier montant avant (112) et/ou du deuxième montant avant (114) se situe transversalement à la direction d'insertion (144) de l'au moins un montant arrière (116 ; 118).

8. Dispositif de remplacement selon l'une quelconque des revendications précédentes, **caractérisé en ce que** des éléments de guidage (106) espacés pour le support (32) sont disposés sur le cadre (60) et/ou **en ce que** des éléments de guidage espacés pour le cadre (60) sont disposés sur le support (32), et en particulier **en ce que** des éléments de guidage (106) font saillie du cadre (60) en direction du support (32) et/ou du support (32) en direction du cadre (60).

9. Dispositif de remplacement selon l'une quelconque des revendications précédentes, **caractérisé par** un dispositif de fixation, par l'intermédiaire duquel le cadre (60) et/ou la carrosserie (26) avec le support (32) peuvent être fixés dans une zone de l'extrémité arrière (74) du cadre (60).

10. Dispositif de remplacement selon l'une quelconque des revendications précédentes, **caractérisé en ce qu'**un élément de guidage (138) pour le support (32) et/ou le véhicule (10) est disposé sur l'au moins un montant arrière (116 ; 118) et/ou le cadre (60), et en particulier **en ce que** l'élément de guidage (138) est disposé selon un angle aigu (140) par rapport à un axe longitudinal (130) de l'au moins un montant arrière (116 ; 118), et en particulier **en ce que** l'au moins un élément de guidage (138) pointe vers l'extérieur à distance du cadre (60), lorsque le montant (116 ; 118) correspondant est fixé au cadre (60), et en particulier **en ce que** l'élément de guidage (138) est disposé selon un angle aigu (140) par rapport à un plan, lequel contient un axe longitudinal (130) de l'au moins un montant arrière (116 ; 118), et/ou est disposé selon un angle aigu par rapport à un plan, lequel est orienté transversalement à l'axe longitudinal, et en particulier **en ce qu'**une butée (142) pour le support (32) et/ou le véhicule (10) est disposée sur l'élément de guidage (138), laquelle est orientée en particulier au moins approximativement parallèlement à la direction transversale (64) du cadre (60).

11. Dispositif de remplacement selon la revendication 10, **caractérisé par** au moins un premier montant arrière (116) et un deuxième montant arrière (118), lesquels présentent respectivement un élément de guidage (138), dans lequel, lorsque le premier montant arrière (116) et le deuxième montant arrière (118) sont disposés sur le cadre (60), un dispositif de guidage défini par les éléments de guidage (138) s'amincit, dans lequel, lorsque le dispositif de soutien (100) est posé sur un sol (42) plat, l'amincissement est orienté dans une direction parallèle au sol (42) et/ou perpendiculairement au sol (42).

12. Dispositif de remplacement selon la revendication 10 ou 11, **caractérisé en ce qu'**une ou plusieurs zones d'appui (152) destinées à coopérer avec l'élément de guidage (138) sont disposées sur le support (32) et/ou le véhicule (10), dans lequel en particulier l'élément de guidage (138) peut glisser sur une zone d'appui (152).

13. Combinaison d'un véhicule (10) avec un support (32) basculant, d'au moins une carrosserie (26) et d'un dispositif de remplacement (108) selon l'une quelconque des revendications précédentes, et en particulier en ce que le support (32) présente un axe de basculement (34), lequel est disposé dans la zone d'une extrémité arrière (30) du véhicule (10), par rapport à un sens de marche avant (28).

14. Procédé de remplacement d'une carrosserie (26) pour un véhicule (10) avec un support (32) basculant pour la carrosserie (26) au moyen d'un dispositif de remplacement (108) selon l'une quelconque des revendications 1 à 13,
dans lequel le procédé pour le montage d'une carrosserie (26) sur le support (32) comprend :
- l'amenée du cadre (60) auquel est fixée la carrosserie (26) et auquel est fixé le dispositif de soutien (100) au-dessus du support (32), dans lequel le dispositif de soutien (100) s'appuie sur le sol (42) ;
- le basculement du support (32) par soulèvement en direction du cadre (60) et accouplement du support (32) au cadre (60) ;
- le basculement supplémentaire du support (32), avec entraînement concomitant du cadre (60), lorsqu'au moins un montant arrière (116 ; 118) du cadre (60) est en appui sur le sol (42), par soulèvement jusqu'à ce que le premier montant avant (112) et le deuxième montant avant (114) soient soulevés du sol (42) ;
- le retrait du premier montant avant (112) et du deuxième montant avant (114) du cadre (60) ;
- le rebasculement du support (32) avec le cadre (60), dans lequel l'au moins un montant arrière (116 ; 118) est soulevé du sol (42) ; et
- le retrait de l'au moins un montant arrière (116 ; 118) ;
et/ou dans lequel le procédé de démontage d'une carrosserie (26), laquelle est fixée au support (32) par l'intermédiaire du cadre (60), comprend :
- la fixation de l'au moins un montant arrière (116 ; 118) au cadre (60), dans lequel l'au moins un montant arrière (116 ; 118) est espacé du sol (42) ;
- le basculement du support (32) auquel le cadre (60) est accouplé par soulèvement jusqu'à ce que l'au moins un montant arrière (116 ; 118) s'appuie sur le sol (42) et le premier montant avant (112) et le deuxième montant avant (114) peuvent être fixés au cadre (60) à distance du sol (42) ;
- la fixation du premier montant avant (112) et du deuxième montant avant (114) au cadre (60) ;
- l'abaissement du support (32) auquel est accouplé le cadre (60) par basculement jusqu'à ce que le premier montant avant (112) et le deuxième montant avant (114) s'appuient sur le sol ;
- le découplement du support (32) du cadre (60) et l'abaissement supplémentaire du support (32) sans cadre (60) par basculement ; et
- l'amenée du cadre (60) avec le dispositif de soutien (100) et la carrosserie (26) à distance du support (32).

15. Procédé selon la revendication 14, **caractérisé en ce que**, lors du montage de la carrosserie (26), la carrosserie (26) est fixée avec le support (32) dans une zone de l'extrémité arrière (74) du cadre (60), dans lequel le cadre (60) est accouplé au support (32) dans une zone de l'extrémité avant (72) du cadre (60) et/ou **en ce que**, pour l'enlèvement de la carrosserie (26), une fixation du cadre (60) au support (32) dans la zone de l'extrémité arrière (74) du cadre (60) est libérée,
et/ou, **en ce que** pour amener le cadre (60) auquel est fixé le dispositif de soutien (100) au-dessus du support (32), le véhicule (10) est déplacé sous le cadre (60) et/ou le cadre (60) avec le dispositif de soutien (100) est déplacé au-dessus du support (32), et/ou **en ce que**, pour amener le cadre (60) à distance du support (32), le véhicule (10) est déplacé à distance du cadre (60) et/ou le cadre (60) avec le dispositif de soutien (100) est déplacé à distance du véhicule (10),
et/ou, **en ce que** des éléments de guidage (98 ; 106 ; 138) sur le cadre (60) et/ou sur le dispositif de soutien (100) assurent une orientation du support (32) par rapport au cadre (60), et en particulier, **en ce que** des éléments de conduite (126) manoeuvrables sur le premier montant avant (112) et/ou le deuxième montant avant (114) assurent une orientation du support (32) par rapport au cadre (60),
et/ou, **en ce que**, pour le montage de la carrosserie (26), une extrémité arrière (74) du support (32) ou une extrémité arrière (30) du véhicule (10) est amenée en contact avec l'au moins un montant arrière (116 ; 118).
